# EUROPEAN PATENT APPLICATION

(11) **EP 4 730 071 A1**
(43) Date of publication of application: **22.04.2026**
(21) Application number: 24845791.3
(22) Date of filing: 05.06.2024
(51) Int. Cl.: G06F 1/16, G09F 9/30

(54) **FLEXIBLE DISPLAY AND ELECTRONIC DEVICE COMPRISING SAME**

(30) Priority: 24.07.2023 KR 20230095927; 04.09.2023 KR 20230117059
(71) Applicant: Samsung Electronics Co., Ltd., Suwon-si, Gyeonggi-do 16677 (KR)
(72) Inventor: KIM, Taejeong, Suwon-si Gyeonggi-do 16677 (KR); PARK, Byounggyu, Suwon-si Gyeonggi-do 16677 (KR); SONG, Kyunghwan, Suwon-si Gyeonggi-do 16677 (KR); LEE, Garam, Suwon-si Gyeonggi-do 16677 (KR); HAN, Jungmoo, Suwon-si Gyeonggi-do 16677 (KR); NAM, Kiju, Suwon-si Gyeonggi-do 16677 (KR); HWANG, Hyunjin, Suwon-si Gyeonggi-do 16677 (KR); KIM, Moonsoo, Suwon-si Gyeonggi-do 16677 (KR); CHOI, Hyunsuk, Suwon-si Gyeonggi-do 16677 (KR)
(74) Representative: Gulde & Partner
(86) International application number: PCT/KR2024/007719
(87) International publication number: WO 2025/023487

(57) **Abstract**

According to an embodiment of the present disclosure, an electronic device may comprise a housing, a flexible display, or a first support plate. The housing can include a first housing portion or a second housing portion. The second housing portion can move between a retracted position and an extended position with respect to the first housing portion. The first support plate can support at least a portion of the flexible display. The first support plate can include a first base portion or a first wing portion. The first wing portion can extend from the first base portion. At least a portion of the first wing portion can be curved in a first direction from the outer surface of the flexible display toward the inner surface of the flexible display while the second housing portion is at the extended position.

## Description

### [Technical Field]

Various embodiments disclosed herein relate to an electronic devices, for example, to a flexible display and an electronic device including the same.

### [Background Art]

With the remarkable development of information communication technology, semiconductor technology, and the like, the distribution and use of various electronic devices are rapidly increasing. In particular, recent electronic devices are being developed to be portable and capable of communication.

The term "electronic device" may refer to a device that performs a specific function according to an installed program, such as a home appliance, an electronic scheduler, a portable multimedia player, a mobile communication terminal, a tablet PC, an image and sound device, a desktop or laptop PC, or a vehicle navigation system. For example, these electronic devices may output stored information as sound or images. As the degree of integration of electronic devices increases and ultra-high-speed and high-capacity wireless communication become more widespread, a single electronic device, such as a mobile communication terminal, may be now equipped with various functions. For example, not only communication functions but also entertainment functions such as gaming, multimedia functions such as music and video playback, communication and security functions such as mobile banking, as well as schedule management and electronic wallet functions, are being integrated into a single electronic device. These electronic devices are being downsized to be conveniently carried by users.

As mobile communication services extend into the multimedia service domain, the display sizes of electronic devices may be increased in order to allow users to fully utilize multimedia services, in addition to voice calls and short message services.

The above-described information may be provided as related art for the purpose of helping to understand the disclosure. No claim or determination is made as to whether any of the foregoing may be applied as prior art with respect to the disclosure.

### [Detailed Description of the Invention]

### [Technical Solution]

According to an embodiment of the disclosure, an electronic device may include a housing, a flexible display, or a first support plate. The housing may include a first housing part or a second housing part. The second housing part may be configured to move between a retracted position and an extended position with respect to the first housing part. The flexible display may be supported by the first housing part or the second housing part. The first support plate may be configured to support at least a portion of the flexible display. The first support plate may include a first base portion or a first wing portion. The first wing portion may extend from the first base portion. At least a portion of the first wing portion may be configured to be curved in a first direction toward an inner surface of the flexible display from an outer surface of the flexible display while the second housing part is in the extended position.

According to an embodiment of the disclosure, an electronic device may include a housing, a flexible display, a first support plate, or a lattice plate. The housing may include a first housing part or a second housing part. The second housing part may be configured to move between a retracted position and an extended position with respect to the first housing part. The flexible display may be supported by the first housing part or the second housing part. The first support plate may be configured to support at least a portion of the flexible display. The first support plate may include a first base portion or a first wing portion. The first wing portion may extend from the first base portion. The lattice plate may be disposed between the flexible display and the first support plate.

### [Brief Description of Drawings]

FIG. 1 is a block diagram of an electronic device according to various embodiments in a network environment.
FIG. 2 is a view illustrating the state in which a second display area of a display according to an embodiment of the disclosure is accommodated in a housing.
FIG. 3 is a view illustrating the state in which the second display area of the display according to an embodiment of the disclosure is exposed to the exterior of the housing.
FIG. 4 is an exploded perspective view of an electronic device according to an embodiment of the disclosure.
FIG. 5A is a cross-sectional view of an embodiment of the disclosure, taken along line A-A' in FIG. 2.
FIG. 5B is a cross-sectional view of an embodiment of the disclosure, taken along line B-B' in FIG. 3.
FIG. 6 is an exploded perspective view of an electronic device according to an embodiment of the disclosure.
FIG. 7 is a perspective view illustrating a first support plate according to an embodiment of the disclosure.
FIG. 8 is a schematic cross-sectional view of the first support plate according to an embodiment of the disclosure.
FIG. 9 is a cross-sectional view of the first support plate according to an embodiment of the disclosure.
FIG. 10 is a cross-sectional view illustrating a display, a lattice plate, and a first support plate according to an embodiment of the disclosure.
FIG. 11 is a cross-sectional view illustrating a display, a lattice plate, and a first support plate according to an embodiment of the disclosure.
FIG. 12A is a perspective view of a second support plate according to an embodiment of the disclosure.
FIG. 12B is a cross-sectional perspective view illustrating the second support plate and a first guide rail according to an embodiment of the disclosure.
FIG. 13A is a perspective view of a third support plate according to an embodiment of the disclosure.
FIG. 13B is a cross-sectional perspective view illustrating the third support plate and a second guide rail according to an embodiment of the disclosure.
FIG. 14 is a cross-sectional perspective view of an electronic device according to an embodiment of the disclosure.
FIG. 15 is a cross-sectional perspective view of the electronic device according to an embodiment of the disclosure.
FIG. 16 is a cross-sectional view of the electronic device in a slide-in state, according to an embodiment of the disclosure.

### [Mode for Carrying out the Invention]

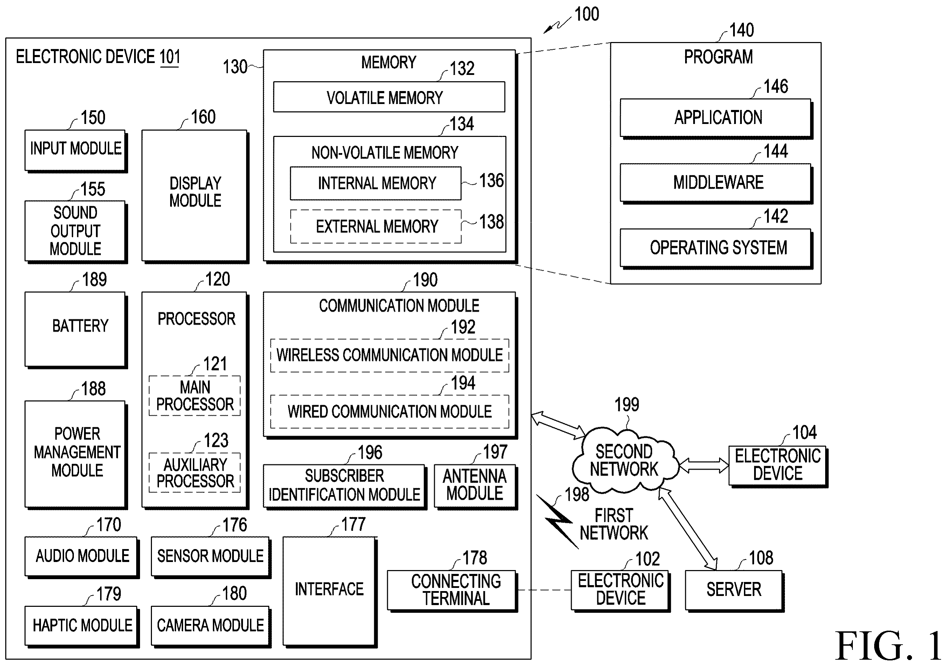

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

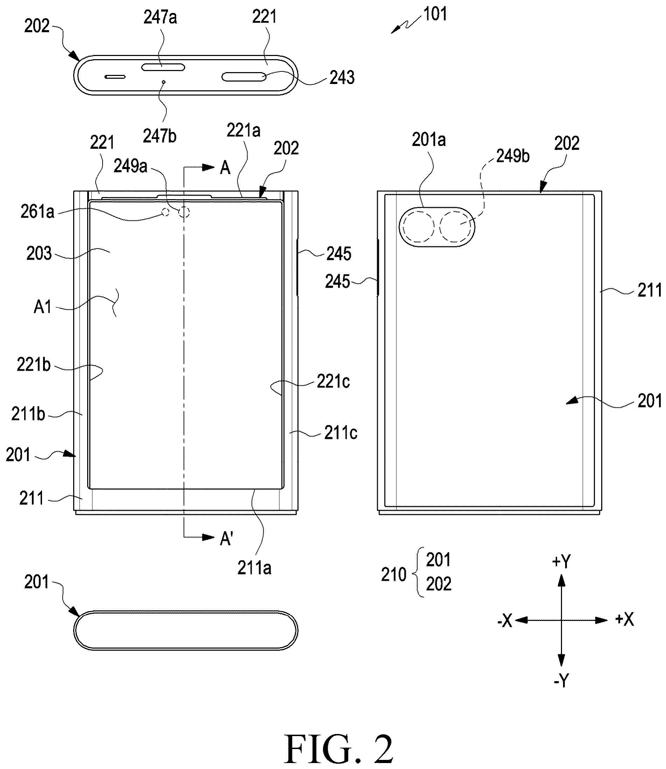

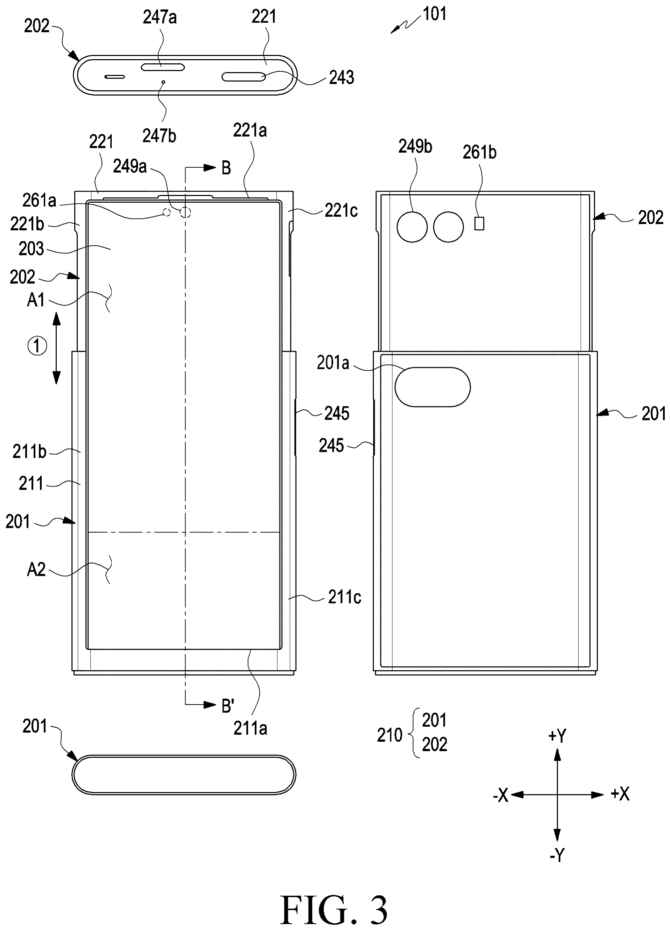

FIG. 2 is a view illustrating the state in which a second display area (e.g., the display area A2 in FIG. 3) of a display is accommodated according to an embodiment of the disclosure in the housing.

FIG. 3 is a view illustrating the state in which the second display area of the display according to an embodiment of the disclosure is exposed to the exterior of the housing.

FIGS. 2 and 3 illustrate a structure in which a display 203 (e.g., a flexible display or rollable display) is expanded in the longitudinal direction (e.g., the +Y direction) when viewed from the front of the electronic device 101. However, the expansion direction of the display 203 is not limited to one direction (e.g., the +Y direction). For example, a design change may be made such that the display 203 may be expanded upward (e.g., in the +Y direction), rightward (e.g., in the +X direction), leftward (e.g., in the -X direction), and/or downward (e.g., in the -Y direction).

The state illustrated in FIG. 2 may be referred to as a slid-in state of the electronic device 101 or a state in which the second display area A2 of the display 203 is closed.

The state illustrated in FIG. 3 may be referred to as a slid-out state of the electronic device 101 or a state in which the second display area A2 of the display 203 is opened.

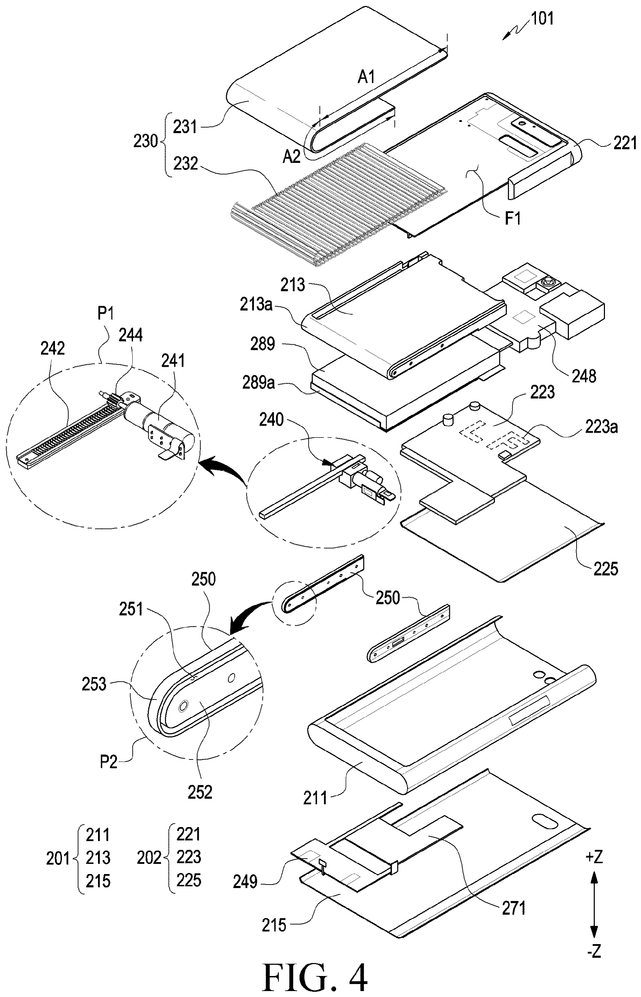

The embodiments of FIGS. 2 and 3 may be combined with the embodiment of FIG. 1 or the embodiments of FIGS. 4 to 16.

Referring to FIGS. 2 and 3 , the electronic device 101 (e.g., the electronic device 101 in FIG. 1) may include a housing 210. The housing 210 may include a first housing part 201 and a second housing part 202 disposed to be movable relative to the first housing part 201. In an embodiment, the electronic device 101 may be interpreted as having a structure in which the first housing part 201 is disposed to be slidable relative to the second housing part 202. According to an embodiment, the second housing part 202 may be configured to be reciprocate by a predetermined distance in the illustrated direction (e.g., the direction indicated by arrow ①) relative to the first housing 201.

According to an embodiment, the second housing part 202 may be referred to as a slide portion or a slide housing and may be movable relative to the first housing part 201. According to an embodiment, the second housing part 202 may accommodate various electrical and electronic components such as a circuit board and a battery. When the electronic device 101 is in the slid-in state, the second housing part 202 may be defined as being in a retracted position, and when the electronic device 101 is in the slid-out state, the second housing part 202 may be defined as being in an expanded position. For example, the second housing part 202 may be configured to move between a retracted position and an extended position with respect to the first housing part 201.

According to an embodiment, the slid-in state of the electronic device 101 (or the slid-out state of the electronic device 101) may be changed into the slid-out state of the electronic device 101 (or the slid-in state of the electronic device 101) based on a predefined user input. For example, the slid-in state of the electronic device 101 (or the slid-out state of the electronic device 101) may be changed into the slid-out state (or the slid-in state of the electronic device 101) in response to a user input on a physical button which is exposed through a portion of the first housing part 201 or a portion of the second housing part 202. For example, the slid-in state (or the slid-out state of the electronic device 101) may be changed into the slid-out state (or the slid-in state of the electronic device 101) in response to a touch input on an executable object displayed within a screen display area (e.g., the first display area A1). For example, the slid-in state (or the slid-out state of the electronic device 101) may have a contact point on the screen display area (e.g., the first display area A1) and may be changed into the slid-out state (or the slid-in state of the electronic device 101) in response to a touch input having a pressing intensity greater than a reference intensity. For example, the slid-in state (or the slid-out state of the electronic device 101) may be changed into the slid-out state (or the slid-in state of the electronic device 101) in response to a voice input received through a microphone of the electronic device 101. For example, the slid-in state (or the slid-out state of the electronic device 101) may be changed to the slid-out state (or the slid-in state of the electronic device 101) in response to an external force applied to the first housing part 201 and/or the second housing part 202 in order to move the second housing part 202 relative to the first housing part 201. For example, the slid-in state (or the slid-out state of the electronic device 101) may be changed to the slid-out state (or the slid-in state of the electronic device 101) in response to a user input identified by an external electronic device (e.g., earbuds or smartwatch) connected to the electronic device 101. However, the slid-in/out operation of the electronic device 101 is not limited to these.

According to an embodiment, the first housing part 201 may accommodate an actuator (e.g., a motor), a speaker, a SIM socket, and/or a sub-circuit board electrically connected to a main circuit board. The second housing part 202 may accommodate the main circuit board mounted with electrical components such as an application processor (AP) and a communication processor (CP). According to an embodiment, the second housing part 202 may accommodate an actuator, a speaker, a SIM socket, and/or a sub-circuit board electrically connected to the main circuit board, and the first housing part 201 may accommodate a main circuit board mounted with electrical components such as an application processor (AP) and a communication processor (CP). According to an embodiment, the sub-circuit board and the main circuit board may be disposed in the first housing part 201 or in the second housing part 202.

According to an embodiment, the first housing part 201 may include a first cover member 211 (e.g., a main case). The first cover member 211 may include a (1-1)^{th} side wall 211a, a (1-2)^{th} side wall 211b extending from the (1-1)^{th} side wall 211a, and a (1-3)^{th} side wall 211c extending from the (1-1)^{th} side wall 211a substantially parallel to the (1-2)^{th} side wall 211b. According to an embodiment, the (1-2)^{th} side wall 211b and the (1-3)^{th} side wall 211c may be substantially perpendicular to the (1-1)^{th} side wall 211a.

According to an embodiment, the (1-1)^{th} side wall 211a, the (1-2)^{th} side wall 211b, and the (1-3)^{th} side wall 211c of the first cover member 211 may have a shape that is open on one side (e.g., the front surface) to accommodate (or surround) at least a portion of the second housing part 202. For example, at least a portion of the second housing part 202 may be surrounded by the first housing part 201 and may be slid in a direction parallel to a first surface (e.g., the first surface F1 in FIG. 1) (e.g., the direction indicated by arrow ①) while being guided by the first housing part 201. According to an embodiment, the (1-1)^{th} side wall 211a, the (1-2)^{th} side wall 211b, and/or the (1-3)^{th} side wall 211c of the first cover member 211 may be integrally configured. According to an embodiment, the (1-1)^{th} side wall 211a, the (1-2)^{th} side wall 211b, and/or the (1-3)^{th} side wall 211c of the first cover member 211 may be provided as separate structures and coupled or assembled to each other.

According to an embodiment, the first cover member 211 may be configured to surround at least a portion of a display 203. For example, the display 203 may be provided to be at least partially surrounded by the (1-1)^{th} side wall 211a, the (1-2)^{th} side wall 211b, and/or the (1-3)^{th} side wall 211c of the first cover member 211.

According to an embodiment, the second housing part 202 may include a second cover member 221 (e.g., a slide plate). The second cover member 221 may have a plate shape and include a first surface (e.g., the first surface F1 in FIG. 4) supporting internal components. For example, the second cover member 221 may support at least a portion of the display 203 (e.g., the first display area A1). According to an embodiment, the second cover member 221 may be referred to as a front cover.

According to an embodiment, the second cover member 221 may include a (2-1)^{th} side wall 221a, a (2-2)^{th} side wall 221b extending from the (2-1)^{th} side wall 221a, and a (2-3)^{th} side wall 221c extending from the (2-1)^{th} side wall 221a substantially parallel to the (2-2)^{th} side wall 221b. According to an embodiment, the (2-2)^{th} side wall 221b and the (2-3)^{th} side wall 221c may be substantially perpendicular to the (2-1)^{th} side wall 221a.

According to various embodiments, as the second housing part 202 moves in the first direction (e.g., direction ①) parallel to the (2-2)^{th} side wall 221b or the (2-3)^{th} side wall 221c, the electronic device 101 may be in the slid-in state and the slid-out state. In the slid-in state of the electronic device 101, the second housing part 202 is located at a first distance from the (1-1)^{th} side wall 211a of the first housing part 201, and in the slid-out state of the electronic device 101, the second housing part 202 may be moved to be located at a second distance greater than the first distance from the (1-1)^{th} side wall 211a of the first housing part 201. In an embodiment, in the slid-in state of the electronic device 101, the first housing part 201 may be configured to partially surround the (2-2)^{th} side wall 221b and the (2-3)^{th} side wall 221c.

According to an embodiment, the electronic device 101 may be in an intermediate state between the slid-in state of FIG. 2 (e.g., the fully closed state) and the slid-out state of FIG. 3 (e.g., the fully opened state). The distance between the (1-1)^{th} side wall 211a and the (2-1)^{th} side wall 221a in the intermediate state of the electronic device 101 may be smaller than the distance between the (1-1)^{th} side wall 211a and the (2-1)^{th} side wall 211a of the electronic device 101 in the fully opened state and may be greater than the distance between the (1-1)^{th} side wall 211a and the (2-1)^{th} side wall 221a of the electronic device 101 in the fully closed state. According to an embodiment, as at least a portion of the display 203 slides in the intermediate state of the electronic device 101, the area of the display exposed to the outside may be variable. For example, in the intermediate state of the electronic device 101, the ratio of the width (the length in the X direction) and the height (the length in the Y direction) of the display 203 and/or the distance between the (1-1)^{th} side wall 211a and the (2-1)^{th} side wall 221a may be changed based on the slide movement of the electronic device 101.

According to an embodiment, the electronic device 101 may include a display 203, key input devices 245, a connector hole 243, audio modules 247a and 247b, or camera modules 249a and 249b. According to an embodiment, the electronic device 101 may further include an indicator (e.g., an LED device) or various sensor modules.

According to an embodiment, the display 203 may be configured such that the size of a portion visible from the front side of the housing 210 is changed based on the slide movement of the second housing part 202. According to an embodiment, the display 203 may include a first display area A1 and a second display area A2 configured to be exposed to the outside of the electronic device 101 based on the slide movement of the second housing part 202.

According to an embodiment, the first display area A1 may be disposed on the second housing part 202. For example, the first display area A1 may be disposed on the second cover member 221 of the second housing part 202. According to an embodiment, the second display area A2 extends from the first display area A1, and as the second housing part 202 slides relative to the first housing part 201, the second display area A2 may be accommodated inside the first housing part 201 or visually exposed to the exterior of the electronic device 101. According to an embodiment, as the electronic device 101 is changed from the slid-in state to the slid-out state, the display 203 may be expanded in the downward direction of the electronic device 101 (e.g., in the -Y direction). For example, when the electronic device 101 is in the slid-out state, the second display area A2 may be visually exposed below the display 203 (e.g., in the -Y direction). According to an embodiment, as the electronic device 101 is changed from the slid-in state to the slid-out state, the display 203 may be expanded in the upward direction of the electronic device 101 (e.g., in the +Y direction). For example, when the electronic device 101 is in the slid-out state, the second display area A2 may be visually exposed above the display 203 (e.g., in the +Y direction).

According to an embodiment, the second display area A2 may move substantially while being guided by an area of the first housing part 201 (e.g., the curved surface 213a in FIG. 4), and may be accommodated in a space located inside the first housing part 201 or exposed to the outside of the electronic device 101. According to an embodiment, the second display area A2 may be moved based on the sliding of the second housing part 202 in the first direction (e.g., the direction indicated by arrow ①). For example, while the second housing part 202 slides, a portion of the second display area A2 may be deformed into a curved shape at a position corresponding to the curved surface 213a of the first housing part 201.

According to an embodiment, when viewed from above the second cover member 221 (e.g., the front cover), when the electronic device 101 is changed from the slid-in state to the slid-out state (for example, when the second housing part 202 slides to be expanded with respect to the first housing part 201), the second display area A2 may form a substantially flat plane together with the first display area A1 while being gradually exposed to the outside of the first housing part 201. According to an embodiment, the display 203 may be coupled to or arranged adjacent to a touch-sensing circuit, a pressure sensor that is capable of measuring touch intensity (pressure), and/or a digitizer that detects a magnetic field-type stylus pen. According to an embodiment, regardless whether the electronic device 101 is in the slid-in or slid-out state, a portion of the exposed second display area A2 may be located on a portion of the first housing part (e.g., the curved surface 213a in FIG. 4), and a portion of the second display area A2 may maintain the curved shape at a position corresponding to the curved surface 213a.

According to an embodiment, the key input device 245 may be located in one area of the housing 210 (e.g., the first housing part 201 and/or the second housing part 202). The electronic device 101 may be designed such that the illustrated key input devices 245 are omitted or additional key input devices are included depending on the external appearance and use state. According to an embodiment, the electronic device 101 may include key input devices (not illustrated), such as a home key button or touch pads arranged around the home key button. According to an embodiment, at least some of the key input devices 245 may be disposed on the (1-1)^{th} side wall 211a, the (1-2)^{th} side wall 211b, and/or the (1-3)^{th} side wall 211c of the first housing part 201. According to an embodiment, at least some of the key input devices 245 may be disposed on the (2-1)^{th} side wall 221a, the (2-2)^{th} side wall 221b, and/or the (2-3)^{th} side wall 221c of the second housing part 202.

According to an embodiment, the connector hole 243 may be omitted in some embodiments and may accommodate a connector (e.g., a USB connector) for transmitting/receiving power and/or data to/from an external electronic device. According to an embodiment (not illustrated), the electronic device 101 may include a plurality of connector holes 243, and some of the connector holes 243 may function as connector holes for transmitting/receiving audio signals to/from an external electronic device. In the illustrated embodiment, the connector hole 243 is located in the second housing part 202, but is not limited to thereto. The connector hole 243 or a connector hole (not illustrated) may be located in the first housing part 201.

According to an embodiment, the audio modules 247a and 247b may include one or more speaker holes 247a or one or more microphone holes 247b. One of the speaker holes 247a may be provided as a receiver hole for a voice call, and another one may be provided as an external speaker hole. The electronic device 101 may include a microphone configured to acquire sound, and the microphone may acquire sound outside the electronic device 101 through the microphone holes 247b. According to an embodiment, the electronic device 101 may include a plurality of microphones to detect the direction of sound. According to an embodiment, the electronic device 101 may include an audio module in which the speaker holes 247a and the microphone holes 247b are implemented as a single hole, or a speaker in which the speaker holes 247a are excluded (e.g., a piezo speaker). According to an embodiment, the speaker hole 247a and the microphone hole 247b may be located in the first housing part 201 and/or the second housing part 202.

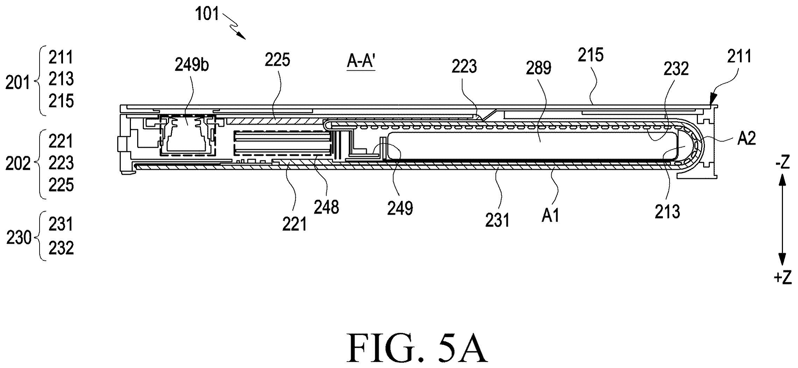

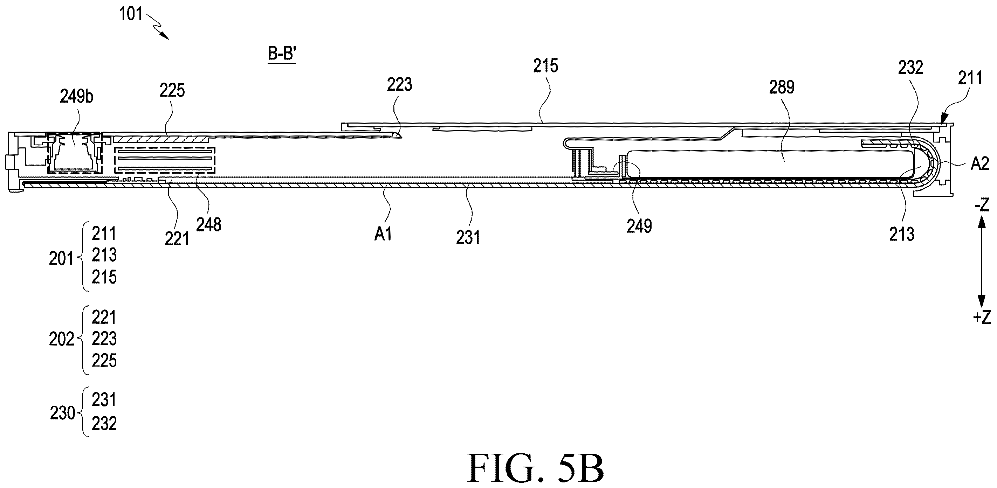

According to an embodiment, the camera modules 249a and 249b may include a first camera module 249a (e.g., a front camera) and a second camera module 249b (e.g., a rear camera) (e.g., the second camera module 249b in FIGS. 5A and 5B). According to an embodiment, the electronic device 101 may include at least one of a wide-angle camera, a telephoto camera, or a close-up camera. In some embodiments, the electronic device 101 may include an infrared projector and/or an infrared receiver to measure the distance to a subject. The camera modules 249a and 249b may include one or more lenses, an image sensor, and/or an image signal processor. The first camera module 249a may be arranged to be oriented in the same direction as the display 203. For example, the first camera module 249a may be arranged around the first display area A1 or in an area overlapping the display 203, and may capture a subject through the display 203 when arranged in the area overlapping the display 203. According to an embodiment, the first camera module 249a may include an under-display camera (UDC) which may be hidden without being visually exposed to a screen display area (e.g., the first display area A1). According to an embodiment, the second camera module 249b may capture a subject in a direction opposite to the first display area A1. According to an embodiment, the first camera module 249a and/or the second camera module 249b may be disposed on the second housing part 202. According to an embodiment, a plurality of second camera module 249b may be provided to provide various arrangements. For example, the plurality of second camera modules 249b may be arranged along the width direction (the X-axis direction), which is a direction substantially perpendicular to the slide movement direction (e.g., the Y-axis direction) of the electronic device 101. As another example, the plurality of second camera modules 249b may be arranged along the slide movement direction (e.g., the Y-axis direction) of the electronic device 101. As another example, the plurality of second camera modules 249b may be arranged along N * M rows and columns like a matrix.

According to an embodiment, when the electronic device 101 is in the slid-in state, the second camera module 249b may not be visually exposed to the outside of the electronic device 101, and when the electronic device 101 is in the slid-out state, the second camera module 249b may capture a scene outside the electronic device 101. According to an embodiment, the second camera module 249b may photograph the outside of the electronic device 101 when the electronic device 101 is in the slid-in state and/or the slid-out state. For example, at least a portion of the housing 210 (e.g., the first rear surface plate 215 and/or the second rear surface plate 225 in FIG. 4) may be substantially transparent, and the second camera module 249b may capture a scene outside the electronic device 101 through the first rear surface plate 215 and/or the second rear surface plate 225. According to an embodiment, when the electronic device 101 is in the slid-in state and/or the slid-out state, the second camera module 249b may be visually exposed to the outside of the electronic device 101 and photograph the outside. For example, the first housing part 201 (e.g., the first rear surface plate 215 in FIG. 4) may include an opening 201a for the second camera module 249b.

According to an embodiment, an indicator (not illustrated) of the electronic device 101 may be disposed on the first housing part 201 or the second housing part 202, and may include a light-emitting diode to provide state information of the electronic device 101 as a visual signal. Sensor modules 261a and 261b of the electronic device 101 may generate an electrical signal or a data value corresponding to an internal operating status of the electronic device 101 or an external environmental status. The sensor modules 261a and 261b may include, for example, a proximity sensor, a fingerprint sensor, and/or a biometric sensor (e.g., an iris/face recognition sensor or an HRM sensor). In an embodiment, the sensor modules 261a and 261ab may further include at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor. According to an embodiment, the sensor modules 261a and 261b may be disposed in the first housing part 201 and/or the second housing part 202. For example, the sensor modules 261a and 261b may include, for example, a first sensor module 261a (e.g., a proximity sensor or an illuminance sensor) disposed on the front surface of the electronic device 101 and/or a second sensor module 261b (e.g., a heart rate monitoring (HRM) sensor) disposed on the rear surface of the electronic device 101.

FIG. 4 is an exploded perspective view of an electronic device according to an embodiment of the disclosure.

FIG. 5A is a cross-sectional view of an embodiment of the disclosure, taken along line A-A' in FIG. 2.

FIG. 5B is a cross-sectional view of an embodiment of the disclosure, taken along line B-B' in FIG. 3.

Referring to FIGS. 4, 5A, and/or 5B, the electronic device 101 (e.g., the electronic device 101 in FIGS. 1 to 3) may include a first housing part 201, a second housing part 202, a display assembly 230, and a driving structure 240. The components of the first housing part 201, the second housing part 202, and the display assembly 230 of FIG. 4, FIG. 5A and/or FIG. 5B may be wholly or partly the same as those of the first housing part 201, the second housing part 202, and the display 203 of FIG. 2 and/or FIG. 3.

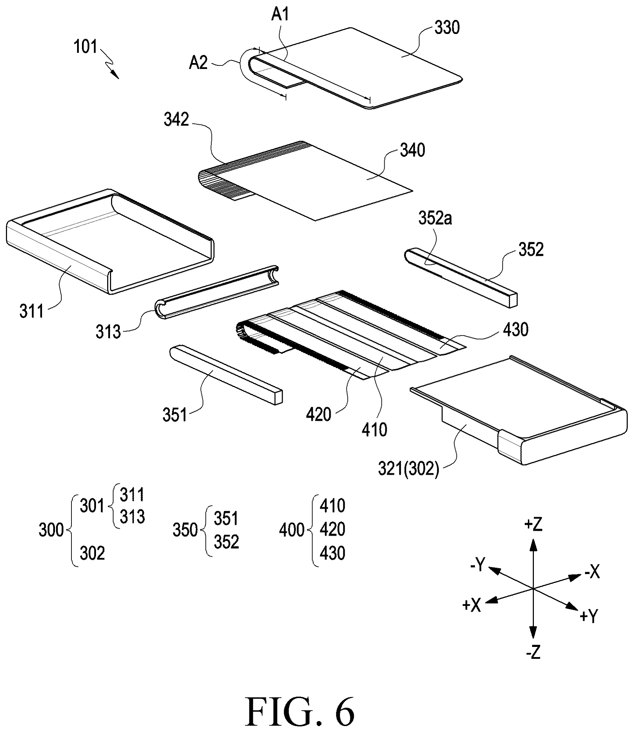

The embodiments of FIGS. 4 to 5B may be combined with the embodiments of FIGS. 1 to 3 or the embodiments of FIGS. 6 to 16.

According to an embodiment, the first housing part 201 may include a first cover member 211 (e.g., the first cover member 211 in FIGS. 2 and 3), a frame 213, and a first rear surface plate 215.

According to an embodiment, the first cover member 211 may accommodate at least a portion of the frame 213 and a component (e.g., the battery 289) located on the frame 213. According to an embodiment, the first cover member 211 may be configured to surround at least a portion of a second housing part 202. According to an embodiment, the first cover member 211 may protect components (e.g., the second circuit board 249 and the frame 213) located in the first housing part 201 from external impact. According to an embodiment, the second circuit board 249, which is electrically connected to the electrical components (e.g., an actuator, a speaker, a shim socket, and/or the first circuit board 248), may be connected to the first cover member 211.

According to an embodiment, the frame 213 may be connected to the first cover member 211. For example, the frame 213 may be connected to the first cover member 211, and the second housing part 202 may be relatively moved with respect to the first cover member 211 and/or the frame 213. According to an embodiment, the frame 213 may accommodate the battery 289. For example, the frame 213 may include a groove to accommodate the battery 289. The frame 213 may be connected to a battery cover 289a and may surround at least a portion of the battery 289 together with the battery cover 289a. According to an embodiment, the frame 213 may include a curved portion 213a facing the display assembly 230.

According to an embodiment, the first rear surface plate 215 may substantially define at least a portion of the exterior of the first housing part 201 or the electronic device 101. For example, the first rear surface plate 215 may be coupled to the outer surface of the first cover member 211. According to an embodiment, the first rear surface plate 215 may provide a decorative effect on the exterior of the electronic device 101. The first rear surface plate 215 may be made of at least one of metal, glass, synthetic resin, or ceramic.

According to an embodiment, the second housing part 202 may include a second cover member 221 (e.g., the second cover member 221 in FIGS. 2 and 3), a rear cover 223, and a second rear surface plate 225.

According to an embodiment, the second cover member 221 may be connected to the first housing part 201 via a guide rail 250, and may linearly reciprocate in in one direction (e.g., the direction indicated by arrow ① in FIG. 3) while being guided by the guide rail 250.

According to an embodiment, the second cover member 221 may be configured to support at least a portion of the display 231. For example, the second cover member 221 may include a first surface F1, and the first display area A1 of the display 231 may be substantially located on the first surface F1 and maintained in a flat plate shape. According to an embodiment, the second cover member 221 may be made of a metal material and/or a non-metal (e.g., polymer) material. According to an embodiment, the first circuit board 248, which accommodates electronic components (e.g., the processor 120 and/or the memory 130 in FIG. 1), may be connected to the second cover member 221. According to an embodiment, the second cover member 221 may protect components (e.g., the first circuit board 248 and the rear cover 223) located in the second housing part 202 from external impact.

According to an embodiment, the rear cover 223 may protect components (e.g., the first circuit board 248) located on the second cover member 221. For example, the rear cover 223 may be connected to the second cover member 221 and surround at least a portion of the first circuit board 248. According to an embodiment, the rear cover 223 may include an antenna pattern (e.g., at least one antenna element 223a) configured to communicate with an external electronic device. For example, when the rear cover 223 is an injection molded product (e.g., an antenna carrier) of a dielectric material, the at least one antenna element 223a may be disposed on the outer surface (e.g., the surface oriented in the -Z-axis direction) of the rear cover 223. For example, the at least one antenna element 223a may include a laser direct structuring (LDS) antenna pattern provided on the outer surface of the rear cover 223. For example, the at least one antenna element 223a may be provided in the manner of being embedded in the rear cover 223 when the rear cover is molded. For example, the at least one antenna element 223a may be configured to transmit or receive a wireless signal in a predetermined frequency band (e.g., a legacy band) by being electrically connected to a wireless communication circuit (e.g., the wireless communication module 192 in FIG. 1) disposed on the first circuit board 248.

According to an embodiment, the second rear surface plate 225 may substantially define at least a portion of the exterior of the second housing part 202 or the electronic device 101. For example, the second rear surface plate 225 may be coupled to the outer surface of the second cover member 221. According to an embodiment, the second rear surface plate 225 may provide a decorative effect on the exterior of the electronic device 101. The second rear surface plate 225 may be made of at least one of metal, glass, synthetic resin, or ceramic.

According to an embodiment, the display assembly 230 may include a display 231 (e.g., the display 203 in FIGS. 2 and/or 3) and a multi-bar structure 232 supporting the display 231. According to an embodiment, the display 231 may be referred to as a flexible display, a foldable display, and/or a rollable display. According to an embodiment, the first display area A1 of the display 231 may be supported by a rigid body, and the second display area A2 may be supported by a bendable structure. For example, the first display area A1 may be supported by the first surface F1 of the second cover member 221 or a plate (not illustrated). The second display area A2 may be supported by the multi-bar structure 232.

According to an embodiment, the multi-bar structure 232 may be connected or attached to at least a portion of the display 231 (e.g., the second display area A2). According to an embodiment, as the second housing part 202 slides, the multi-bar structure 232 may move relative to the first housing part 201. When the electronic device 101 is in the slid-in state (e.g., FIG. 2), the multi-bar structure 232 may be mostly accommodated inside the first housing part 201, and may be located between the first cover member 211 and the second cover member 221. According to an embodiment, at least a portion of the multi-bar structure 232 may move to correspond to the curved surface 213a located at an edge of the frame 213. According to an embodiment, the multi-bar structure 232 may be referred to as a display support member or support structure, and may be in the form of an elastic plate.

According to an embodiment, the driving structure 240 may relatively move the second housing part 202 relative to the first housing part 201. For example, the driving structure 240 may include an actuator 241 configured to generate a driving force for sliding the second housing part 202 relative to the first housing part 201. The drive structure 240 may include a gear 244 (e.g., a pinion) connected to the actuator 241 and a rack 242 configured to be engaged with the gear. Referring to FIG. 4, the components (e.g., the actuator 241, the rack 242, and the gear 244) of the drive structure 240, which are inverted (e.g., facing the -Z axis direction), are illustrated within the circle P1.

According to an embodiment, the housing in which the rack 242 is located and the housing in which the actuator 241 is located may be different. According to an embodiment, the actuator 241 may be connected to the first housing part 201, and the rack 242 may be connected to the second housing part 202. According to an embodiment, the actuator 241 may be connected to the second housing part 202, and the rack 242 may be connected to the first housing part 201.

According to an embodiment, the actuator 241 may be controlled by a processor (e.g., the processor 120 in FIG. 1). For example, the processor 120 may include an actuator driver driving circuit and deliver a pulse width modulation (PWM) signal to the actuator 241 to control the speed of the actuator 241 and/or the torque of the actuator 241. According to an embodiment, the actuator 241 may be electrically connected to a processor (e.g., the processor 120 in FIG. 1) located on a circuit board (e.g., the first circuit board 248 in FIG. 4) via a flexible printed circuit board.

According to an embodiment, the second housing part 202 may accommodate a first circuit board 248 (e.g., a main board). According to an embodiment, a processor, memory, and/or an interface may be mounted on the first circuit board 248. The processor may include, for example, one or more of a central processing unit, an application processor, a graphics processing unit, an image signal processor, a sensor hub processor, or a communication processor. According to various embodiments, the first circuit board 248 may include a flexible printed circuit board-type radio frequency cable (FRC). The first circuit board 248 may be disposed on at least a portion of the second cover member 221, and electrically connected to an antenna module (e.g., the antenna module 197 in FIG. 1) and a communication module (e.g., the communication module 190 in FIG. 1).

According to an embodiment, the memory may include, for example, volatile memory or nonvolatile memory.

According to an embodiment, the interface may include, for example, a high-definition multimedia interface (HDMI), a universal serial bus (USB) interface, an SD card interface, and/or an audio interface. For example, the interface may electrically or physically connect the electronic device 101 to an external electronic device, and may include a USB connector, an SD card/MMC connector, or an audio connector.

According to an embodiment, the electronic device 101 may include a first circuit board 248 (e.g., a main circuit board) and a second circuit board 249 (e.g., a sub-circuit board) spaced apart from each other within the first housing part 201. The second circuit board 249 may be electrically connected to the first circuit board 248 via a flexible board. The second circuit board 249 may be electrically connected to the battery 289 or electrical components disposed in an end area of the electronic device 101, such as a speaker and/or a SIM socket, to transmit signals and power. According to an embodiment, the second circuit board 249 may accommodate an antenna member 271 (e.g., a coil) or be connected to the antenna member 271. The antenna member 271 may include an MFC (multi-function coil) antenna including a wireless charging antenna for a wireless charging function, a neat field communication (NFC) antenna for a neat field communication function and/or a magnetic secure transmission (MST) antenna for an electronic payment function. For example, the battery 289 may receive power from an external electronic device by using the antenna member 271 for wireless charging. As another example, the battery 289 may deliver power to an external electronic device by using the antenna member 271 for wireless charging.

According to an embodiment, the battery 289 may serve as a device that supplies power to at least one component of the electronic device 101, and may include a non-rechargeable primary cell, a rechargeable secondary cell, or a fuel cell. The battery 289 may be integrally disposed inside the electronic device 101 or may be detachably disposed on the electronic device 101. According to an embodiment, the battery 289 may be configured as a single integrated battery or may include a plurality of separable batteries. According to an embodiment, the battery 289 may be located on the frame 213. For example, the battery 289 may be surrounded by the frame 213 and the battery cover 289a. According to an embodiment, the battery may be located within the second housing part 202 to be slidable with the second housing part 202.

According to an embodiment, the guide rail 250 may guide the movement of the multi-bar structure 232. For example, the multi-bar structure 232 may slide along the slit 251 provided in the guide rail 250. According to an embodiment, the guide rail 250 may be connected to the first housing part 201. For example, the guide rail 250 may be connected to the first cover member 211 and/or the frame 213. According to an embodiment, the slit 251 may be referred to as a groove or recess provided on the inner surface of the guide rail 250. Referring to FIG. 4, the guide rail 250 is enlarged and illustrated within the circle P2.

According to an embodiment, the guide rail 250 may provide a force to the multi-bar structure 232 based on the driving of the actuator 241.

According to an embodiment, when the electronic device 101 is changed from the slid-in state to the slid-out state, at least a portion of the second housing part 202 may slide to be exposed to the outside from the first housing part 201 through the driving of the actuator 241. For example, the gear 244 may rotate in a first rotation direction based on the driving of the actuator 241. As the rack 242 is fixed on the second cover member 221 of the second housing part 202, the second housing part 202 may slide to be exposed to the outside of the first housing part 201 based on the slide movement of the rack 242 toward the slid-out direction.

According to an embodiment, when the electronic device 101 is changed from the slid-in state to the slid-out state, the inner portion 252 of the guide rail 250 may provide a force to the multi-bar structure 232. The multi-bar structure 232, which has received the force, may move along the slit 251 of the guide rail 250, and the second housing part 202 may slide so as to be expanded with respect to the first housing part 201. At least a portion of the display assembly 230 accommodated between the first cover member 211 and the frame 213 may be expanded to the front surface.

According to an embodiment, when the electronic device 101 is changed from the slid-out state to the slid-in state, at least a portion of the second housing part 202 may slide to be inserted into the first housing part 201 through the driving of the actuator 241. For example, the gear 244 may rotate in a second rotation direction opposite to the first rotation direction based on the driving of the actuator 241. As the rack 242 is fixed on the second cover member 221 of the second housing part 202, the second housing part 202 may slide to enter the inside of the first housing part 201 based on the slide movement of the rack 242 toward the slid-in direction.

According to an embodiment, when the electronic device 101 is changed from the slid-out state to the slid-in state, the outer portion 253 of the guide rail 250 may provide a force to the bent multi-bar structure 232. The multi-bar structure 232, which has received the force, may move along the slit 251 of the guide rail 250, and the second housing part 202 may slide so as to be at least partially accommodated in the first housing part 201. At least a portion of the display assembly 230 may be accommodated between the first cover member 211 and the frame 213.

According to an embodiment, the electronic device 101 may be configured to stop in a predetermined intermediate state between the slid-in state and the slid-out state by controlling the driving of the actuator 241 (a free stop function). According to an embodiment, the electronic device 101 may be changed to the slid-in state, the intermediate state, or the slid-out state through a user's manipulation while no driving force is provided to the actuator 241.

Referring to FIG. 5A, when the electronic device 101 is in the slid-in state, at least a portion of the second housing part 202 may be arranged to be accommodated in the first housing part 201. As the second housing part 202 is arranged to be accommodated in the first housing part 201, the overall volume of the electronic device 101 may be reduced. According to an embodiment, when the second housing part 202 is accommodated in the first housing part 201, the visually exposed size of the display 231 may be minimized. For example, when the second housing part 202 is fully accommodated in the first housing part 201, the first display area A1 of the display 231 is visually exposed, and at least a portion of the second display area A2 (e.g., the portion oriented in the -Z axis direction) may be disposed between the battery 289 and the first rear surface plate 215.

Referring to FIG. 5B, when the electronic device 101 is in the slid-out state, at least a portion of the second housing part 202 may be arranged to protrude from the first housing part 201. As the second housing part 202 protrudes from the first housing part 201, the overall volume of the electronic device 101 may increase. According to an embodiment, when the second housing part 202 protrudes from the first housing part 201, at least a portion of the second display area A2 of the display 231 may be visually exposed to the outside of the electronic device 101 together with the first display area A1.

FIG. 6 is an exploded perspective view of an electronic device according to an embodiment of the disclosure.

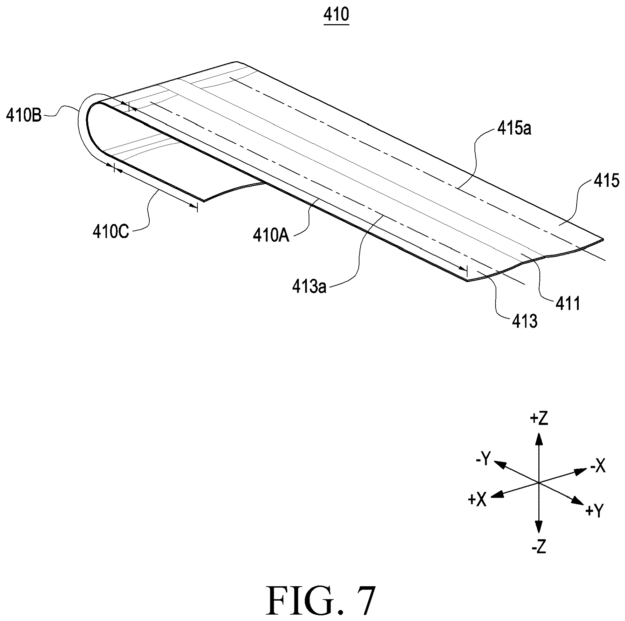

The embodiment of FIG. 6 may be combined with the embodiments of FIGS. 1 to 5B or the embodiments of FIGS. 7 to 16.

Referring to FIG. 6, the electronic device 101 (e.g., the electronic device 101 of FIGS. 1 to 5B) may include a housing 300, a first housing part 301, a second housing part 302, a display 330, a lattice plate 340, a guide rail 350, or a support plate 400.

The housing 300 of FIG. 6 may be partially or wholly the same as the housing 210 of FIGS. 2 to 3. The configuration of the first housing part 301, the second housing part 302, the display 330, or the guide rail 350 of FIG. 6 may be partially or wholly the same as the configuration of the first housing part 201, the second housing part 202, the display 231, or the guide rail 250 of FIG. 4.

According to an embodiment, the electronic device 101 may include a housing 300 including the first housing part 301 and/or the second housing part 302. The housing 300 may form an exterior of the electronic device 101, and various electrical/electronic components of the electronic device 101 may be disposed and/or mounted inside the housing 300.

According to an embodiment, the second housing part 302 may be configured to be movable relative to the first housing part 301. For example, the second housing part 302 may be disposed at an extended position relative to the first housing part 301 (e.g., FIG. 3 or FIG. 5B), or may be disposed at a retracted position relative to the first housing part 301 (e.g., FIG. 2 or FIG. 5A). For example, the second housing part 302 may be configured to move relative to the first housing part 301 between the extended position and the retracted position.

According to an embodiment, the first housing part 301 may include a first cover member 311 (e.g., the first cover member 211 of FIGS. 2 to 5B) and/or a curved guide member 313 (e.g., the curved surface 213a of FIG. 4).

According to an embodiment, the first cover member 311 may be configured to surround at least a portion of the display 330. According to an embodiment, the curved guide member 313 may be provided as at least a portion of a frame (e.g., the frame 213 of FIG. 4) or may be provided as a separate member from the frame. The curved guide member 313 may be located inside the first cover member 311.

According to an embodiment, the curved guide member 313 may be referred to as a curved surface or a curved portion. The curved guide member 313 may face a portion of the second display area A2 that moves from the inside of the first housing part 301 to the outside of the first housing part 301. The curved guide member 313 may face a portion of the second display area A2 that moves from the outside of the first housing part 301 to the inside of the first housing part 301. An outer surface of the curved guide member 313 (e.g., a surface facing the display 330) may include a curved surface having a predetermined curvature or radius of curvature.

According to an embodiment, the curved guide member 313 may be configured to support a bent portion of the display 330.

According to an embodiment, the second housing part 302 may include a second cover member 321 (e.g., the second cover member 221 of FIGS. 2 to 5B). The second cover member 321 may support at least a portion of the display 330 (e.g., a first display area A1).

According to an embodiment, the second cover member 321 and/or the second housing part 302 may form a slide-in state of the electronic device 101 (e.g., FIG. 2 or FIG. 5A) or a slide-out state of the electronic device 101 (e.g., FIG. 2 or FIG. 5B), as the second cover member 321 and/or the second housing part 302 moves relative to the first cover member 311 and/or the first housing part 301 in a sliding movement direction (e.g., a Y-axis direction of FIG. 6).

According to an embodiment, the display 330 may be formed such that the size of a portion viewable from the front side of the housing 300 changes based on the sliding movement of the second housing part 302. The display 330 may include a first display area A1 (e.g., the first display area A1 of FIGS. 2 to 5B) and a second display area A2 (e.g., the second display area A2 of FIGS. 2 to 5B) extending from the first display area A1. The first display area A1 may be disposed on the second cover member 321. The first display area A1 may be at least partially fixed to the second cover member 321, and may slide together with the second cover member 321 based on sliding movement of the second cover member 321. The second display area A2 may be visually exposed to the outside of the electronic device 101 or accommodated inside the electronic device 101 based on sliding movement of the second housing part 302.

According to an embodiment, the second display area A2 may move while being guided by the curved guide member 313 of the first housing part 301, and may be accommodated in a space located inside the first housing part 301 or exposed to the outside of the electronic device 101. The second display area A2 may be deformed into a curved shape at a position or an area corresponding to the curved guide member 313. For example, while the second housing part 302 slides, a portion of the second display area A2 may be deformed into a curved shape at a position corresponding to the curved guide member 313 of the first housing part 301.

According to an embodiment, when the electronic device 101 changes from the slide-in state to the slide-out state (e.g., when the second housing part 302 moves from the retracted position to the extended position), at least a portion of the second display area A2 may be gradually exposed to the outside of the first housing part 301 and may form substantially the same plane as the first display area A1.

According to an embodiment, when the electronic device 101 changes from the slide-out state to the slide-in state (e.g., when the second housing part 302 moves from the extended position to the retracted position), at least a portion of the second display area A2 may be gradually accommodated inside the first housing part 301. At least a portion of the second display area A2 may be deformed into a curved shape at the position corresponding to the curved guide member 313 when the electronic device 101 changes from the slide-out state to the slide-in state, and a portion of the second display area A2 that has passed beyond the curved guide member 313 may form a plane inside the first housing part 301.

According to an embodiment, the guide rail 350 may guide movement of the support plate 400. For example, the guide rail 350 may guide movement of the second support plate 420 or the third support plate 430. The guide rail 350 may be connected to the first cover member 311.

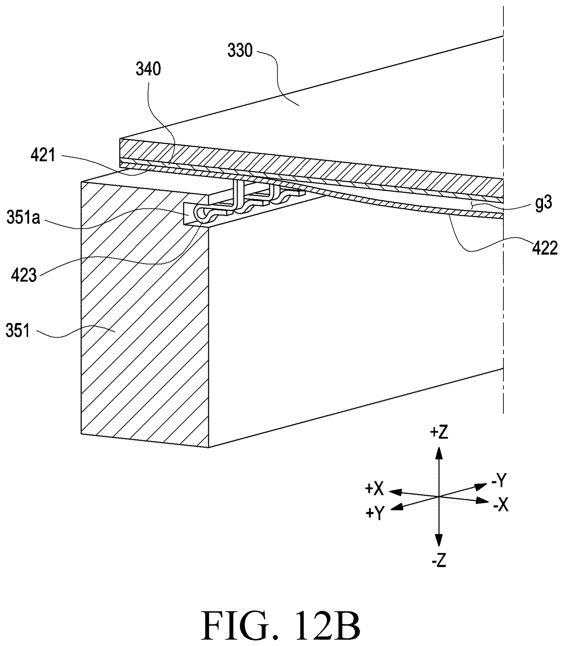

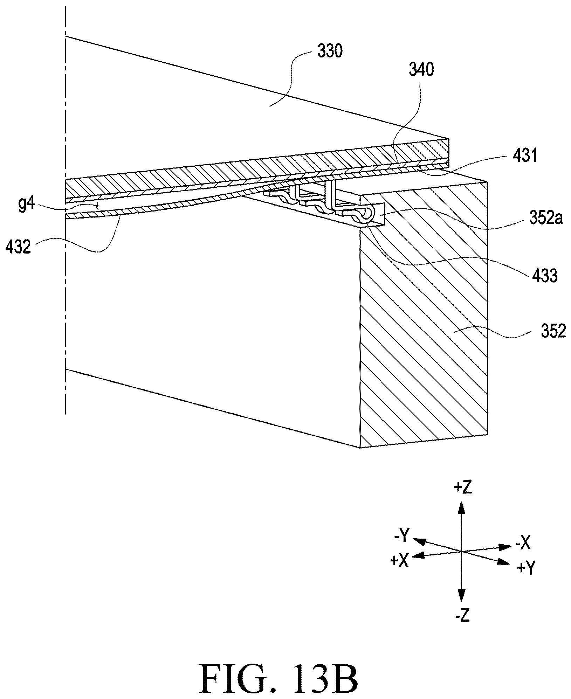

According to an embodiment, the guide rail 350 may include a first guide rail 351 configured to guide movement of the second support plate 420 and/or a second guide rail 352 configured to guide movement of the third support plate 430. The second support plate 420 may slide along a first slit (e.g., the slit 251 of FIG. 4 or the first slit 351a of FIG. 12B) formed in the first guide rail 351. The third support plate 430 may slide along a second slit 352a (e.g., the slit 251 of FIG. 4 or the second slit 352a of FIG. 13B) formed in the second guide rail 352. The first slit 351a may be defined and/or referred to as a first groove or a first recess formed in the first guide rail 351. The second slit 352a may be defined and/or referred to as a second groove or a second recess formed in the second guide rail 352.

According to an embodiment, a lattice plate 340 may be disposed between the display 330 and the support plate 400. The lattice plate 340 may be configured to support the display 330. In addition, the lattice plate 340 may provide a force that flattens at least a portion of the display 330 exposed to the outside of the housing 300 (or a force that maintains flatness). The lattice plate 340 may include a portion corresponding to the first display area A1 and a portion corresponding to the second display area A2. A lattice area 342 may be formed in a portion of the lattice plate 340 corresponding to the second display area A2. The lattice area 342 may include at least one hole formed through a portion of the lattice plate 340 or at least one groove recessed in a portion of the lattice plate 340. The lattice area 342 may provide flexibility to the lattice plate 340. For example, a portion of the lattice plate 340 may be deformed into a curved shape at a position corresponding to the curved guide member 313. The lattice plate 340 may include a bendable metal material, but is not limited thereto. The lattice area 342 may also be referred to as a lattice pattern.

According to an embodiment, the support plate 400 may support the lattice plate 340 and/or the display 330. At least a portion of the support plate 400 may be disposed between the lattice plate 340 and the second cover member 321. Another portion of the support plate 400 may be disposed between the lattice plate 340 and the curved guide member 313.

According to an embodiment, at least a portion of the support plate 400 may be fixed to at least a portion of the second cover member 321. The support plate 400 may slide together based on sliding movement of the second housing part 302.

According to an embodiment, the support plate 400 may move along the slits 351a and 352a of the guide rail 350 based on sliding movement of the second housing part 302 and may support the display 330. The support plate 400 may provide a force to maintain a plane formed by the display 330 when at least a portion of the display 330 exposed to the outside of the housing 300 forms the plane.

According to an embodiment, the support plate 400 may include a portion corresponding to the first display area A1 and a portion corresponding to the second display area A2. A portion of the support plate 400 may be deformed into a curved shape at a position corresponding to the curved guide member 313. The support plate 400 may include a bendable metal material, but is not limited thereto.

According to an embodiment, the support plate 400 may be formed to be at least partially curved so as to support the flat area when a portion of the second display area A2 exposed to the outside of the housing 300 and the first display area A1 form the flat area. For example, the support plate 400 may be at least partially curved in a direction from the outer surface of the display 330 toward the inner surface of the display 330 (e.g., the -Z-axis direction of FIG. 6) at a position not corresponding to the curved guide member 313. The direction from the outer surface of the display 330 toward the inner surface of the display 330 may be defined and/or referred to as a first direction.

According to an embodiment, the support plate 400 may include a first support plate 410, a second support plate 420, or a third support plate 430. The first support plate 410 may be disposed or located between the second support plate 420 and the third support plate 430 with reference to the width direction of the electronic device 101 (e.g., the X-axis direction of FIG. 6). The first support plate 410 may be spaced apart from the second support plate 420 and spaced apart from the third support plate 430 with reference to the width direction of the electronic device 101.

According to an embodiment, the first support plate 410 may support a central portion of the display 330 with reference to the width direction of the electronic device 101. The first support plate 410 may be defined and/or referred to as a mid-plate.

According to an embodiment, the second support plate 420 may be located adjacent to one edge of the first support plate 410. An edge of the second support plate 420 facing the first support plate 410 (e.g., an edge oriented in the -X-axis direction of FIG. 6) may be spaced apart from the first support plate 410. At least a portion of the second support plate 420 may be inserted into or received in a first slit (e.g., the first slit 351a of FIG. 12B) of the first guide rail 351. The second support plate 420 may move along the first slit 351a of the first guide rail 351 based on sliding movement of the second housing part 302. The second support plate 420 may be defined and/or referred to as a first guide plate, a first side plate, or a first wing plate.

According to an embodiment, the third support plate 430 may be located adjacent to the other edge of the first support plate 410. An edge of the third support plate 430 facing the first support plate 410 (e.g., an edge oriented in the +X-axis direction of FIG. 6) may be spaced apart from the first support plate 410. At least a portion of the third support plate 430 may be inserted into or received in the second slit 352a of the second guide rail 352. The third support plate 430 may move along the second slit 352a of the second guide rail 352 based on sliding movement of the second housing part 302. The third support plate 430 may be defined and/or referred to as a second guide plate, a second side plate, or a second wing plate.

According to an embodiment, at least a portion of the support plate 400 and/or at least a portion of the lattice plate 340 may be configured to be bendable. For example, the display 330 may be supported by the support plate 400 and/or the lattice plate 340, which may be at least partially bendable.

According to an embodiment, the guide rail 350 including the first guide rail 351 and/or the second guide rail 352 may be defined and/or interpreted as a portion of the housing 300.

FIG. 7 is a perspective view illustrating a first support plate according to an embodiment of the disclosure.

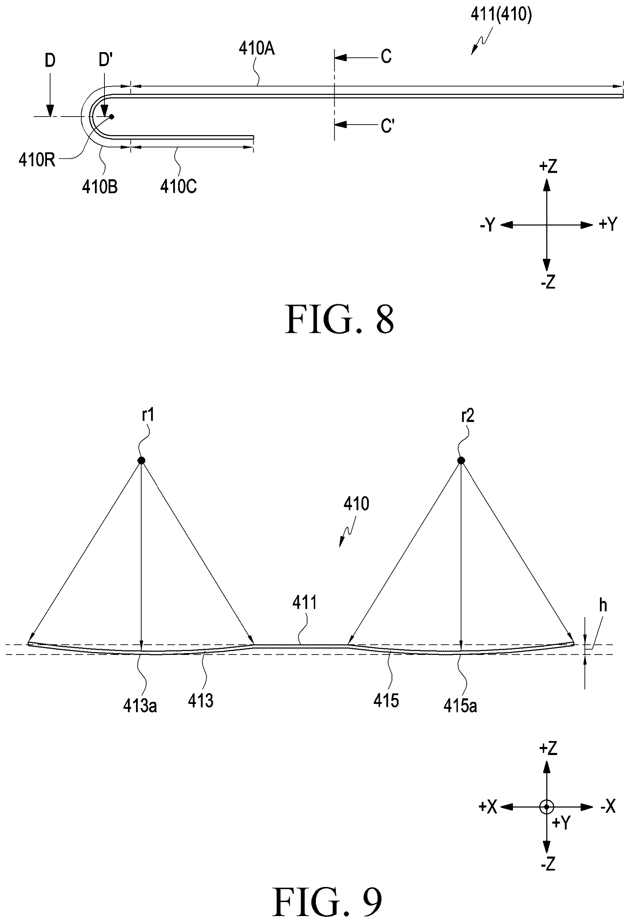

FIG. 8 is a schematic cross-sectional view of the first support plate according to an embodiment of the disclosure.

FIG. 9 is a cross-sectional view of the first support plate according to an embodiment of the disclosure.

FIG. 9 is a cross-sectional view taken along line C-C' of FIG. 8.

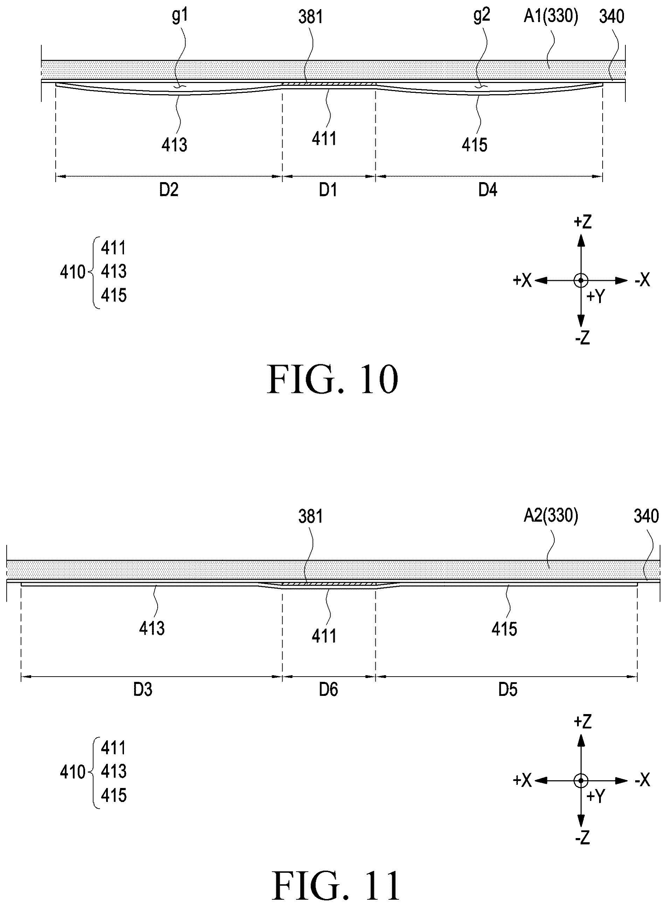

The embodiments of FIGS. 7 and 9 may be combined with the embodiments of FIGS. 1 to 6 or the embodiments of FIGS. 10 to 16.

The configuration of the first support plate 410 of FIGS. 7 to 9 may be partially or wholly the same as the configuration of the first support plate 410 of FIG. 6.

To describe the components of the embodiments of FIGS. 7 to 9, reference numerals of the components of the embodiment of FIG. 6 may be used illustratively.

Referring to FIGS. 7 to 9, the first support plate 410 may include a first base portion 411 and first wing portions 413 and 415 extending from the first base portion 411.

In the illustrated embodiment, a first area 410A, a second area 410B, and a third area 410C are shown. The first area 410A may correspond to a portion of the display 330 exposed to the outside of the housing 300. The second area 410B may correspond to a portion of the display 330 located at a position corresponding to the curved guide member 313. The third area 410C may correspond to a portion of the display 330 accommodated inside the housing 300 (or inside the first housing part 301). The terms, first area 410A, second area 410B, and third area 410C, are used for convenience of description and may be areas that are interpreted differently as a state of the electronic device 101 changes. For example, when the second housing part 302 is at the extended position relative to the first housing part 301 (e.g., FIG. 3 or FIG. 5B), the size of the first area 410A may be greater than the size of the first area 410A when the second housing part 302 is at the retracted position relative to the first housing part 301 (e.g., FIG. 2 or FIG. 5A). For example, when the second housing part 302 is at the extended position relative to the first housing part 301, the size of the third area 410C may be smaller than the size of the third area 410C when the second housing part 302 is at the retracted position relative to the first housing part 301. The first area 410A may be defined and/or referred to as a first flat area. The second area 410B may be defined and/or referred to as a curved area. The third area 410C may be defined and/or referred to as a second flat area. For example, while the state of the electronic device 101 changes (e.g., while the electronic device 101 changes from the slide-in state to the slide-out state), a portion of the second display area A2 may be located in the third area 410C, may then pass over the second area 410B, and may be located in the first area 410A. The terms, first area 410A, the second area 410B, and the third area 410C, are used merely for convenience of description, and the disclosure is not limited thereto.

According to an embodiment, the first support plate 410 may support a portion of the display 330 exposed to the outside of the housing 300 on the first area 410A. The first support plate 410 may support a portion of the display 330 located on the curved guide member 313 in the second area 410B. The first support plate 410 may support a portion of the display 330 accommodated inside the housing 300 in the third area 410C.

According to an embodiment, the first base portion 411 may have a flat shape. The first base portion 411 may include a flat surface. The first base portion 411 may be bonded to at least a portion of the lattice plate 340. The first base portion 411 may be provided flat in the first area 410A and the third area 410C. The first base portion 411 located in the second area 410B may form a curved surface corresponding to the curved guide member 313 when viewed from a lateral side of the electronic device 101 (e.g., when viewed from the +X direction to the -X direction of FIG. 7, or from the -X direction to the +X direction). The first base portion 411 located in the second area 410B may form a flat plane when viewed from an upper side of the electronic device 101 (e.g., when viewed from the +Z direction to the -Z direction of FIG. 7) or when viewed from a lower side of the electronic device 101 (e.g., when viewed from the -Z direction to the +Z direction of FIG. 7). A planar shape of the first base portion 411 when viewed from the upper side or the lower side of the electronic device 101 may be a cross-sectional shape obtained by cutting the first base portion 411 with a virtual plane defined by the X-axis and the Y-axis of FIG. 7, which may be provided in a plane.

Referring to FIG. 8, when viewed from a lateral side of the electronic device 101, the first base portion 411 and/or the first support plate 410 may form a curved surface corresponding to the curved guide member 313. The first base portion 411 and/or the first support plate 410 located in the second area 410B may form a curved surface to have a predetermined curvature or radius of curvature based on a virtual first point 410R.

According to an embodiment, the first wing portions 413 and 415 may extend from the first base portion 411. The first wing portions 413 and 415 may be configured to be at least partially curved or configured to be at least partially flat. For example, a portion of the first wing portions 413 and 415 located in the first area 410A or a portion of the first wing portions 413 and 415 located in the third area 410C may be configured to be at least partially curved. The first wing portions 413 and 415 located in the second area 410B may form a curved surface corresponding to the curved guide member 313 when viewed from a lateral side of the electronic device 101 (e.g., when viewed from the +X direction to the -X direction of FIG. 7, or from the -X direction to the +X direction). The first wing portions 413 and 415 located in the second area 410B may form a flat plane when viewed from an upper side of the electronic device 101 (e.g., when viewed from the +Z direction to the -Z direction of FIG. 7) or when viewed from a lower side of the electronic device 101 (e.g., when viewed from the -Z direction to the +Z direction of FIG. 7). A planar shape of the first wing portions 413 and 415 when viewed from the upper side or the lower side of the electronic device 101 may be a cross-sectional shape obtained by cutting the first wing portions 413 and 415 with a virtual plane defined the X-axis and the Y-axis of FIG. 7, which may be provided in a plane.

According to an embodiment, the first wing portions 413 and 415 may be formed to be curved in a direction from an outer surface of the display 330 toward an inner surface of the display 330 in the first area 410A. The direction from the outer surface of the display 330 toward the inner surface of the display 330 may be defined and/or referred to as a first direction. The outer surface of the display 330 may be a surface of the display 330 facing the outside of the electronic device 101. The inner surface of the display 330 may be a surface of the display 330 facing the inside of the electronic device 101 and may be a surface supported by the lattice plate 340.

Referring to FIG. 9, a cross-sectional view of the first wing portions 413 and 415 located in the first area 410A is illustrated. The description of the curved shape of the first wing portions 413 and 415 given with reference to FIG. 9 may be identically and/or similarly applied and/or referred to the curved shape of the first wing portions 413 and 415 located in the third area 410C. The description of the curved shape of the first wing portions 413 and 415 given with reference to FIG. 9 may be identically and/or similarly applied and/or referred to the curved shape of the second wing portion 422 of the second support plate 420 located in the first area 410A and the third area 410C. The description of the curved shape of the first wing portions 413 and 415 given with reference to FIG. 9 may be identically and/or similarly applied and/or referred to the curved shape of the third wing portion 432 of the third support plate 430 located in the first area 410A and the third area 410C.

According to an embodiment, the first wing portions 413 and 415 may include a (1-1)^{th} wing portion 413 extending from one end of the first base portion 411, and a (1-2)^{th} wing portion 415 extending from the other end of the first base portion 411.

According to an embodiment, the (1-1)^{th} wing portions 413 may be formed to be curved in the direction from the outer surface of the display 330 toward the inner surface of the display 330 in the first area 410A. The (1-2)^{th} wing portion 415 may be curved in the direction from the outer surface of the display 330 toward the inner surface of the display 330 in the first area 410A. The direction from the outer surface of the display 330 toward the inner surface of the display 330 may be defined and/or referred to as a first direction.

According to an embodiment, by forming the (1-1)^{th} wing portion 413 and/or the (1-2)^{th} wing portion 415 located in the first area 410A to be curved in a direction from the outside of the housing 300 toward the inside of the housing 300, the first support plate 410 located in the first area 410A may provide supporting force in the sliding direction of the second housing part 302 (e.g., the Y-axis direction of FIGS. 7 to 9). For example, the supporting force provided by the first support plate 410 may restrict or reduce sagging of a portion of the display 330, which is exposed to the outside of the housing 300, into the inside of the housing 300. Accordingly, a portion of the display 330 exposed to the outside of the housing 300 may be formed flat, without forming a bend, with respect to the sliding direction of the housing 300. Since the display 330 is not bent, the quality of a visual image output from the display 330 may be improved.

According to an embodiment, the (1-1)^{th} wing portion 413 may be formed to be curved so as to have a predetermined curvature 1/r1 or curvature radius r1. For example, the (1-1)^{th} wing portion 413 may be bent such that a central portion 413a of the (1-1)^{th} wing portion 413 has a predetermined depth h with respect to an upper surface of the first base portion 411 (e.g., a surface oriented in the +Z direction of FIG. 9). For example, the predetermined depth h may be a distance from the upper surface of the first base portion 411 to the lower end of the (1-1)^{th} wing portion 413. The (1-2)^{th} wing portion 415 may be formed to be curved so as to have a predetermined curvature 1/r2 or curvature radius r2. For example, the (1-2)^{th} wing portion 415 may be bent such that a central portion 415a of the (1-2)^{th} wing portion 415 has a predetermined depth h with respect to the upper surface of the first base portion 411. For example, the predetermined depth h may be a distance from the upper surface of the first base portion 411 to the lower end of the (1-2)^{th} wing portion 415. The curvature radius r1 of the (1-1)^{th} wing portion 413 may be substantially the same as the curvature radius r2 of the (1-2)^{th} wing portion 415. The depth h of the (1-1)^{th} wing portion 413 may be substantially the same as the depth h of the (1-2)^{th} wing portion 415.

FIG. 10 is a cross-sectional view illustrating a display, a lattice plate, and a first support plate according to an embodiment of the disclosure.

FIG. 10 is a cross-sectional view taken along line C-C' of FIG. 8.

FIG. 11 is a cross-sectional view illustrating a display, a lattice plate, and a first support plate according to an embodiment of the disclosure.

FIG. 11 is a cross-sectional view taken along line D-D' of FIG. 8.

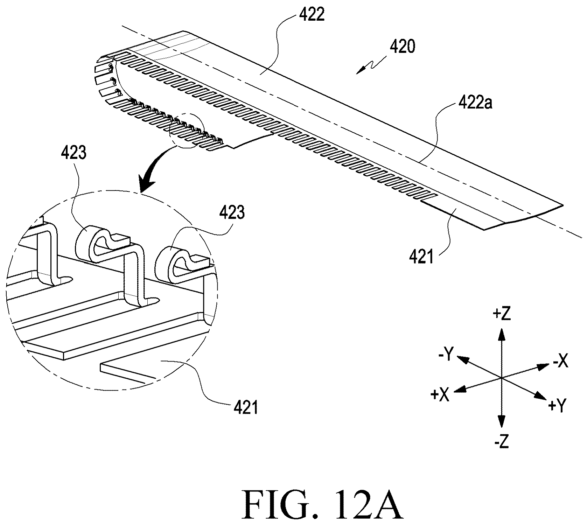

The embodiments of FIGS. 10 to 11 may be combined with the embodiments of FIGS. 1 to 9 or the embodiments of FIGS. 12A to 16.

Referring to FIGS. 10 to 11, an electronic device 101 may include a display 330, a lattice plate 340, a first support plate 410, or an adhesive member 381. The first support plate 410 may include a first base portion 411, a (1-1)^{th} wing portion 413, or a (1-2)^{th} wing portion 415.

The configurations of the display 330, the lattice plate 340, or the first support plate 410 of FIGS. 10 to 11 may be partially or wholly the same as the configurations of the display 330, the lattice plate 340, or the first support plate 410 of FIG. 6. The configurations of the first support plate 410, the first base portion 411, the (1-1)^{th} wing portion 413, or the (1-2)^{th} wing portion 415 of FIGS. 10 to 11 may be partially or wholly the same as the configurations of the first support plate 410, the first base portion 411, the (1-1)^{th} wing portion 413, or the (1-2)^{th} wing portion 415 of FIGS. 7 to 9.

For convenience of description of the configurations of the embodiments of FIGS. 10 and 11, the reference numerals of the components of the embodiments of FIGS. 6 to 9 may be used illustratively.

According to an embodiment, the adhesive member 381 may couple a portion of the lattice plate 340 to the first base portion 411. For example, the adhesive member 381 may be located between the lattice plate 340 and the first base portion 411. The adhesive member 381 may include at least one of double-sided tape, a bond, or an adhesive.

According to an embodiment, the first base portion 411 may be bonded to a portion of the lattice plate 340 via the adhesive member 381. For example, the first base portion 411 may be bonded or closely attached to the display 330 via the adhesive member 381.

Referring to FIG. 10, the lattice plate 340 and the first support plate 410 supporting the first display area A1 (e.g., the first display area A1 of FIG. 6) of the display 330 located on the first area 410A are illustrated. The description given with reference to FIG. 10 may be equally or similarly applied to the lattice plate 340 and the first support plate 410 supporting the second display area A2 (e.g., the second display area A2 of FIG. 6) of the display 330 located in the first area 410A. The description given with reference to FIG. 10 may be equally or similarly applied to the lattice plate 340, the second support plate 420, and/or the third support plate 430 supporting the first display area A1 and/or the second display area A2 located in the first area 410A.

According to an embodiment, in the first area 410A, the lattice plate 340 may support the inner surface (e.g., a surface oriented in the -Z direction of FIGS. 10 and 11) of the display 330. The lattice plate 340 may support the display 330 so that at least a portion of the display 330 exposed to the outside of the housing 300 is provided flat. According to an embodiment, the lattice plate 340 may be coupled or fixed to the inner surface of the display 330.

According to an embodiment, in the first area 410A, the (1-1)^{th} wing portion 413 and/or the (1-2)^{th} wing portion 415 may be formed to be curved in the direction from the outer surface of the display 330 (e.g., the surface oriented in the +Z direction of FIG. 10) toward the inner surface of the display 330 (e.g., the surface oriented in the -Z direction of FIG. 10). The direction from the outer surface of the display 330 toward the inner surface of the display 330 may be defined and/or referred to as a thickness direction of the display 330 and/or a first direction. In the first area 410A, the (1-1)^{th} wing portion 413 may form a predetermined gap g1 with at least a portion of the lattice plate 340 or at least a portion of the display 330. In the first area 410A, the (1-2)^{th} wing portion 415 may form a predetermined gap g2 with at least a portion of the lattice plate 340 or at least a portion of the display 330.

According to an embodiment, one end (e.g., the end oriented in the -X direction of FIG. 10) of the (1-1)^{th} wing portion 413 may be connected to one end of the first base portion 411 and may support the lattice plate 340 and the display 330. The other end (e.g., the end oriented in the +X direction of FIG. 10) of the (1-1)^{th} wing portion 413 may support the lattice plate 340 and the display 330. The opposite ends of the (1-1)^{th} wing portion 413 may respectively support the lattice plate 340 and the display 330. Accordingly, even if the predetermined gap g1 is formed between the lattice plate 340 and the display 330 between the opposite ends of the (1-1)^{th} wing portion 413, the (1-1)^{th} wing portion 413 may provide at least two supporting points for the lattice plate 340 and the display 330 in the width direction (e.g., the X-axis direction of FIG. 10) of the electronic device 101. The lattice plate 340 and the display 330 may be provided flat in the width direction (e.g., the X-axis direction of FIG. 10) of the electronic device 101 without bending.

According to an embodiment, one end (e.g., the end oriented in the +X direction of FIG. 10) of the (1-2)^{th} wing portion 415 may be connected to the other end of the first base portion 411 and may support the lattice plate 340 and the display 330. The other end (e.g., the end oriented in the -X direction of FIG. 10) of the (1-2)^{th} wing portion 415 may support the lattice plate 340 and the display 330. The opposite ends of the (1-2)^{th} wing portion 415 may respectively support the lattice plate 340 and the display 330. Accordingly, even if the predetermined gap g2 is formed between the lattice plate 340 and the display 330 between the opposite ends of the (1-2)^{th} wing portion 415, the (1-2)^{th} wing portion 415 may provide at least two supporting points for the lattice plate 340 and the display 330 in the width direction of the electronic device 101. The lattice plate 340 and the display 330 may be provided flat in the width direction of the electronic device 101 without bending.

According to an embodiment, the first support plate 410 may support the display 330 in the first area 410A so that the display 330 is not bent in the sliding direction (e.g., the Y-axis direction of FIG. 10) of the second housing part 302. In addition, the first support plate 410 may support the display 330 in the first area 410A so that the display 330 is not bent in the width direction (e.g., the X-axis direction of FIG. 10) of the electronic device 101.

According to an embodiment, in the first area 410A, with reference to the width direction of the electronic device 101, the first base portion 411 may have a first width D1, the (1-1)^{th} wing portion 413 may have a second width D2, and the (1-2)^{th} wing portion 415 may have a fourth width D4. The second width D2 and the fourth width D4 may be larger than the first width D1. The second width D2 may be substantially the same as the fourth width D4.

Referring to FIG. 11, the lattice plate 340 and the first support plate 410 supporting the second display area A2 (e.g., the second display area A2 of FIG. 6) of the display 330 located in the second area 410B are illustrated. The description given with reference to FIG. 11 may be applied in the same or a similar manner to the lattice plate 340, the second support plate 420, and/or the third support plate 430 supporting the second display area A2 located in the second area 410B.

According to an embodiment, in the second area 410B, the lattice plate 340 may support the inner surface (e.g., the surface oriented in the +Y direction of FIG. 11) of the display 330. The lattice plate 340 may support at least a portion of the display 330 located on the curved guide member 313. According to an embodiment, the lattice plate 340 may be coupled or fixed to the inner surface of the display 330.

According to an embodiment, in the second area 410B, the (1-1)^{th} wing portion 413 and/or the (1-2)^{th} wing portion 415 may form a flat plane.

According to an embodiment, in the second area 410B, the (1-1)^{th} wing portion 413 may be in close contact with at least a portion of the lattice plate 340 and may not form a predetermined gap with at least a portion of the lattice plate 340 or at least a portion of the display 330. For example, in the second area 410B, the (1-1)^{th} wing portion 413 may be defined as being in close contact with the bent portion of the display 330. For example, the (1-1)^{th} wing portion 413 may be provided in a plane in the second area 410B based on the width direction of the electronic device 101. For example, the width direction of the electronic device 101 (e.g., the X-axis direction of FIGS. 10 and 11) may be defined and/or referred to as a direction (e.g., a second direction) substantially perpendicular to a direction from the outer surface of the display 330 toward the inner surface of the display 330 (e.g., a first direction). For example, when viewed from the upper side of the electronic device 101 or from the lower side of the electronic device 101, the (1-1)^{th} wing portion 413 in the second area 410B may be provided as flat. For example, in the second area 410B, the (1-1)^{th} wing portion 413 may be formed to be unfolded by being supported by the curved guide member 313. In the second area 410B, the (1-1)^{th} wing portion 413 may be in close contact with the curved guide member 313.

According to an embodiment, in the second area 410B, the (1-2)^{th} wing portion 415 may be in close contact with at least a portion of the lattice plate 340 and may not form a predetermined gap with at least a portion of the lattice plate 340 or at least a portion of the display 330. For example, in the second area 410B, the (1-2)^{th} wing portion 415 may be defined as being in close contact with the bent portion of the display 330. For example, the (1-2)^{th} wing portion 415 may be provided in a plane in the second area 410B with reference to the width direction of the electronic device 101. For example, when viewed from the upper side of the electronic device 101 or from the lower side of the electronic device 101, the (1-2)^{th} wing portion 415 in the second area 410B may be provided as flat. For example, in the second area 410B, the (1-2)^{th} wing portion 415 may be formed to be unfolded by being supported by the curved guide member 313. In the second area 410B, the (1-2)^{th} wing portion 415 may be in close contact with the curved guide member 313.

According to an embodiment, the first support plate 410 may be manufactured by plastically working a flat metal plate. For example, the plastic working may include winding working (or coiling working or bending working). The flat metal plate may be wound to have a curvature (e.g., a first curvature) substantially corresponding to the curvature of the curved guide member (e.g., the curved guide member 313 of FIG. 6). For example, the wound metal plate may have a curvature radius (e.g., a first curvature radius) substantially corresponding to the curvature radius of the curved guide member. For example, through the winding working, the flat metal plate may have a rolled shape, a wound shape, or a spiral shape. In a state in which the wound metal plate is unfolded, the metal plate may be formed to have at least partially a second curvature through bending working. For example, the wound metal plate may have a second curvature radius through the bending working (e.g., working by a rolling roll). For example, in a state in which the wound metal plate is unfolded, the metal plate may be bent in a direction orthogonal to an axis passing through a center of a circular arc forming the first curvature radius, so as to have the second curvature (or the second curvature radius). For example, the metal plate worked by the rolling roll may form the first support plate 410 including the (1-1)^{th} wing portion 413 and the (1-2)^{th} wing portion 415 formed to be curved, and the first base portion 411 formed to be flat. According to an embodiment, the rolling roll may have a shape substantially corresponding to the shape of the first support plate 410 including the first base portion 411, the (1-1)^{th} wing portion 413, and the (1-2)^{th} wing portion 415. The first support plate 410 may also be formed by assembling the first base portion 411, the (1-1)^{th} wing portion 413, and the (1-2)^{th} wing portion 415 which have been individually manufactured. The first curvature (or first curvature radius) may be defined and/or interpreted as being substantially orthogonal to or intersecting the second curvature (or second curvature radius).

According to an embodiment, since the (1-1)^{th} wing portion 413 and/or the (1-2)^{th} wing portion 415 before bending working are in a flat plane state, the (1-1)^{th} wing portion 413 and/or the (1-2)^{th} wing portion 415 after bending working may have Gaussian curvature based on Gauss's remarkable theorem (Gauss's Theorema Egregium). For example, since the (1-1)^{th} wing portion 413 and/or the (1-2)^{th} wing portion 415 before bending working are in a flat plane state, values of two principal curvatures intersecting at an arbitrary point are both "0," and thus, the multiplied value of the two principal curvatures may also be provided as "0." Accordingly, the Gaussian curvature of the (1-1)^{th} wing portion 413 and/or the (1-2)^{th} wing portion 415 after bending working may also be provided as "0."

According to an embodiment, in the first area 410A or the third area 410C, the (1-1)^{th} wing portion 413 and/or the (1-2)^{th} wing portion 415 may be formed to be at least partially curved. For example, as illustrated in FIGS. 9 and 10, the (1-1)^{th} wing portion 413 and/or the (1-2)^{th} wing portion 415 may be curved to have predetermined curvatures (e.g., the curvature 1/r1 and the curvature 1/r2 of FIG. 9) with reference to the width direction of the electronic device 101. In such a case, in the first area 410A (or the third area 410C), the maximum curvature value of the (1-1)^{th} wing portion 413 and/or the (1-2)^{th} wing portion 415 may be the predetermined curvatures 1/r1 and 1/r2. In such a case, in the first area 410A (or the third area 410C), the (1-1)^{th} wing portion 413 and/or the (1-2)^{th} wing portion 415 may have a minimum curvature value with reference to the sliding direction of the second housing part 302. According to an embodiment, since the multiplied value of the minimum curvature value and the maximum curvature value is "0," the curvature value of the (1-1)^{th} wing portion 413 and/or the (1-2)^{th} wing portion 415 may be provided as "0" with reference to the sliding direction of the second housing part 302. For example, as illustrated in FIG. 8, based on the sliding direction of the second housing part 302, the curvature value of the central portion 413a of the (1-1)^{th} wing portion 413 and/or the curvature value of the central portion 415a of the (1-2)^{th} wing portion 415 may be provided as "0." The (1-1)^{th} wing portion 413 and/or the (1-2)^{th} wing portion 415 may be provided in a substantially linear state or a planar state with reference to the sliding direction of the second housing portion 302. Accordingly, at least a portion of the display 330 exposed to the outside of the housing 300 may be supported in a linear state or a planar state without sagging, with reference to the sliding direction of the second housing part 302.

According to an embodiment, in the second area 410B, the (1-1)^{th} wing portion 413 and/or the (1-2)^{th} wing portion 415 may be formed to be at least partially curved when viewed from a lateral side of the electronic device 101. For example, as illustrated in FIG. 8, the first support plate 410 including the (1-1)^{th} wing portion 413 and/or the (1-2)^{th} wing portion 415 may be bent to have predetermined curvatures, respectively, when viewed from a lateral side of the electronic device 101. The predetermined curvatures may be a curvature relative to the first point 410R or a curvature of the curved guide member 313. In such a case, in the second area 410B, the maximum curvature value of the (1-1)^{th} wing portion 413 and/or the (1-2)^{th} wing portion 415 may be the predetermined curvature with relative to the first point 410R. In such a case, in the second area 410B, the (1-1)^{th} wing portion 413 and/or the (1-2)^{th} wing portion 415 may have a minimum curvature with reference to the width direction of the electronic device 101. Since the multiplied value of the minimum curvature value and the maximum curvature value is "0," the curvature value of the (1-1)^{th} wing portion 413 and/or the (1-2)^{th} wing portion 415 may be provided as "0" with reference to the width direction of the electronic device 101. The (1-1)^{th} wing portion 413 and/or the (1-2)^{th} wing portion 415 may be provided in a substantially linear state or a planar state with reference to the width direction of the electronic device 101. Accordingly, at least a portion of the display 330 located on the curved guide member 313 and/or at least a portion of the lattice plate 340 located on the curved guide member 313 may not form a predetermined gap with the (1-1)^{th} wing portion 413 and/or the (1-2)^{th} wing portion 415 located on the curved guide member 313. According to an embodiment, the (1-1)^{th} wing portion 413 and/or the (1-2)^{th} wing portion 415 may be in close contact with the curved guide member 313 in the second area 410B and may form a plane with reference to the width direction of the electronic device 101. A repulsive force may act in a direction away from the curved guide member 313 on at least a portion of the display 330 located in the second area 410B on the curved guide member 313. In the second area 410B, the (1-1)^{th} wing portion 413 and/or the (1-2)^{th} wing portion 415 may be in close contact with the curved guide member 313, and at least a portion of the display 330 may be in close contact with the (1-1)^{th} wing portion 413 and/or the (1-2)^{th} wing portion 415 so as not to form a predetermined gap with the display 330 and the (1-1)^{th} wing portion 413 and/or the (1-2)^{th} wing portion 415. Accordingly, since a force acts on the display 330 in a direction toward the curved guide member 313, the force may offset the repulsive force. Accordingly, concentration of excessive stress on a specific area of the display 330 may be restricted or reduced, and damage or breakage of the display 330 during use of the electronic device 101 may be prevented or restricted.

According to an embodiment, in the second area 410B, with reference to the width direction of the electronic device 101, the first base portion 411 may have a sixth width D6, the (1-1)^{th} wing portion 413 may have a third width D3, and the (1-2)^{th} wing portion 415 may have a fifth width D5. The first width D1 of the first base portion 411 in the first area 410A may be substantially the same as the sixth width D6 of the first base portion 411 in the second area 410B. Since the (1-1)^{th} wing portion 413 is unfolded in the second area 410B, the third width D3 of the (1-1)^{th} wing portion 413 in the second area 410B may be greater than the second width D2 of the (1-1)^{th} wing portion 413 in the first area 410A. Since the (1-2)^{th} wing portion 415 is unfolded in the second area 410B, the fifth width D5 of the (1-2)^{th} wing portion 415 in the second area 410B may be greater than the fourth width D4 of the (1-2)^{th} wing portion 415 in the first area 410A. The widths D1, D2, D3, D4, D5, and D6 described with reference to FIGS. 10 and 11 may be widths with reference to the width direction of the electronic device 101 (e.g., the X-axis direction of FIGS. 10 and 11). For example, the width direction of the electronic device 101 may be defined and/or referred to as a direction (e.g., a second direction) perpendicular to a direction from the outer surface of the display 330 toward the inner surface of the display 330 (e.g., a first direction).

FIG. 12A is a perspective view of a second support plate according to an embodiment of the disclosure.

FIG. 12B is a cross-sectional perspective view illustrating the second support plate and a first guide rail according to an embodiment of the disclosure.

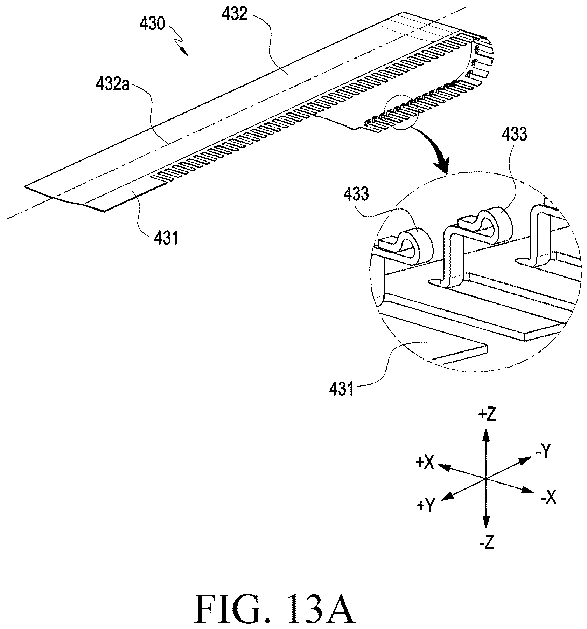

FIG. 13A is a perspective view of a third support plate according to an embodiment of the disclosure.

FIG. 13B is a cross-sectional perspective view illustrating the third support plate and a second guide rail according to an embodiment of the disclosure.

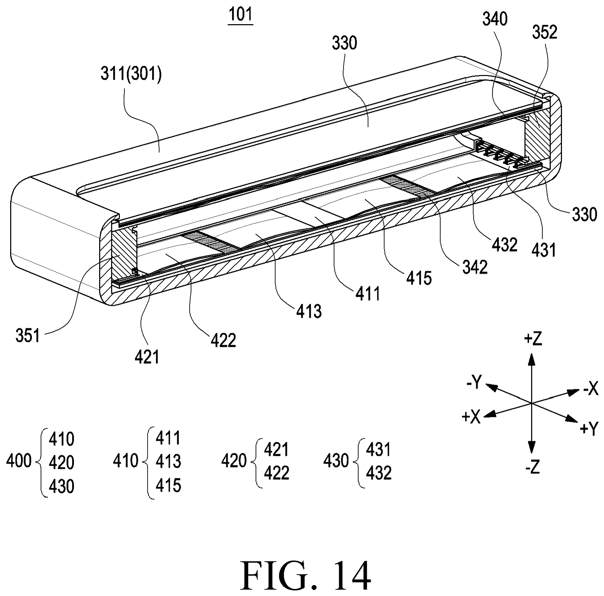

The embodiments of FIGS. 12A to 13B may be combined with the embodiments of FIGS. 1 to 11 or the embodiments of FIGS. 14 to 16.

The configurations of the second support plate 420, the third support plate 430, the first guide rail 351, or the second guide rail 352 of FIGS. 12A to 13B may be partially or wholly be the same as the configurations of the second support plate 420, the third support plate 430, the first guide rail 351, or the second guide rail 352 of FIG. 6.

For convenience of description of the configurations of the embodiments of FIGS. 12A to 13B, the reference numerals of the components of the embodiments of FIGS. 6 to 11 may be used illustratively.

Referring to FIGS. 12A and 12B, the second support plate 420 may include a second base portion 421 and a second wing portion 422.

According to an embodiment, the second wing portion 422 may extend from one end (e.g., the end oriented in the -X direction of FIGS. 12A and 12B) of the second base portion 421.

According to an embodiment, the second support plate 420 may support a portion of the display 330 exposed to the outside of the housing 300 in the first area 410A. The second support plate 420 may support a portion of the display 330 located on the curved guide member 313 in the second area 410B. The second support plate 420 may support a portion of the display 330 accommodated inside the housing 300 in the third area 410C.

According to an embodiment, the second base portion 421 may have a flat shape. The second base portion 421 may include a flat surface. The second base portion 421 may be bonded to at least a portion of the lattice plate 340. For example, the second base portion 421 may be bonded to at least a portion of the lattice plate 340 via an adhesive member (e.g., double-sided tape). The second base portion 421 may be provided flat in the first area 410A and the third area 410C. The second base portion 421 located in the second area 410B may form a curved surface corresponding to the curved guide member 313 when viewed from a lateral side of the electronic device 101 (e.g., when viewed from the +X direction to the -X direction of FIGS. 12A and 12B, or from the -X direction to the +X direction). The second base portion 421 located in the second area 410B may form a flat plane when viewed from an upper side of the electronic device 101 (e.g., when viewed from the +Z direction to the -Z direction of FIGS. 12A and 12B) or when viewed from a lower side of the electronic device 101 (e.g., when viewed from the -Z direction to the +Z direction of FIGS. 12A and 12B). A planar shape of the second base portion 421 when viewed from the upper side or the lower side of the electronic device 101 may be a cross-sectional shape obtained by cutting the second base portion 421 along a virtual plane defined the X-axis and the Y-axis of FIGS. 12A and 12B, which may be provided in a plane.

Referring to FIGS. 12A and 12B, when viewed from a lateral side of the electronic device 101, the second base portion 421 and/or the second support plate 420 may form a curved surface corresponding to the curved guide member 313. The second base portion 421 and/or the second support plate 420 located in the second area 410B may form a curved surface so as to have a predetermined curvature or curvature radius with respect to the first point 410R.

According to an embodiment, the second wing portion 422 may extend from the second base portion 421. The second wing portion 422 may be configured to be at least partially curved or may be configured to be at least partially flat. For example, a portion of the second wing portion 422 located in the first area 410A, or a portion of the second wing portion 422 located in the third area 410C, may be configured to be at least partially curved. The second wing portion 422 located in the second area 410B may form a curved surface corresponding to the curved guide member 313 when viewed from a lateral side of the electronic device 101 (e.g., when viewed from the +X direction to the -X direction of FIGS. 12A and 12B, or from the -X direction to the +X direction). The second wing portion 422 located in the second area 410B may form a flat plane when viewed from an upper side of the electronic device 101 (e.g., when viewed from the +Z direction to the -Z direction of FIGS. 12A and 12B) or when viewed from a lower side of the electronic device 101 (e.g., when viewed from the -Z direction to the +Z direction of FIGS. 12A and 12B). A planar shape of the second wing portion 422 when viewed from the upper side or the lower side of the electronic device 101 may be a cross-sectional shape obtained by cutting the second wing portion 422 with a virtual plane defined by the X-axis and the Y-axis of FIGS. 12A and 12B, which may be provided in a plane.

According to an embodiment the second wing portion 422 may be formed to be curved in the direction from the outer surface of the display 330 toward the inner surface of the display 330 in the first area 410A. In the first area 410A, the second wing portion 422 may form a predetermined gap g3 with at least a portion of the lattice plate 340 or at least a portion of the display 330.

According to an embodiment, the second support plate 420 may include at least one first guide portion 423. The at least one first guide portion 423 may be formed on the second base portion 421. For example, the at least one first guide portion 423 may be formed by working at least a portion of an edge area (e.g., the edge area oriented in the +X direction of FIGS. 12A and 12B) of the second base portion 421. For example, the at least one first guide portion 423 may be a portion worked into a clip shape by bending the second base portion 421 multiple times through a hemming process. The at least one first guide portion 423 may be inserted into a first slit 351a of the first guide rail 351. Accordingly, when the second housing part 302 slides, the second support plate 420 may move along the first slit 351a of the first guide rail 351. For example, at least a portion of the second support plate 420 may move from the inside of the first housing part 301 to the outside of the first housing part 301 along the first slit 351a, and may support the lattice plate 340 and the display 330. At least a portion of the second support plate 420 may move from the outside of the first housing part 301 to the inside of the first housing part 301 along the first slit 351a, and may support the lattice plate 340 and the display 330.

As illustrated in FIG. 12A, in the first area 410A, the curvature value of the central portion 422a of the second wing portion 422 may be "0" with reference to the sliding direction of the second housing part 302.

According to an embodiment, the width (e.g., the width in the X-axis direction of FIGS. 12A and 12B) of the second wing portion 422 in the first area 410A may be smaller than the width (e.g., the width in the X-axis direction of FIGS. 12A and 12B) of the second wing portion 422 in the second area 410B. The distance (e.g., the distance in the X-axis direction of FIGS. 12A and 12B) between the second wing portion 422 and the (1-1)^{th} wing portion 413 in the first area 410A may be greater than the distance (e.g., the distance in the X-axis direction of FIGS. 12A and 12B) between the second wing portion 422 and the (1-1)^{th} wing portion 413 in the second area 410B.

Referring to FIGS. 13A and 13B, the third support plate 430 may include a third base portion 431 and a third wing portion 432. According to an embodiment, the third wing portion 432 may extend from one end (e.g., the end oriented in the +X direction of FIGS. 13A and 13B) of the third base portion 431.

According to an embodiment, the third support plate 430 may support a portion of the display 330 exposed to the outside of the housing 300 in the first area 410A. The third support plate 430 may support a portion of the display 330 located on the curved guide member 313 in the second area 410B. The third support plate 430 may support a portion of the display 330 accommodated inside the housing 300 in the third area 410C.

According to an embodiment, the third base portion 431 may have a flat shape. The third base portion 431 may include a flat surface. The third base portion 431 may be bonded to at least a portion of the lattice plate 340. For example, the third base portion 431 may be bonded to at least a portion of the lattice plate 340 via an adhesive member (e.g., double-sided tape). The third base portion 431 may be provided flat in the first area 410A and the third area 410C. The third base portion 431 located in the second area 410B may form a curved surface corresponding to the curved guide member 313 when viewed from a lateral side of the electronic device 101 (e.g., when viewed from the +X direction to the -X direction of FIGS. 13A and 13B, or from the -X direction to the +X direction). The third base portion 431 located in the second area 410B may form a flat plane when viewed from an upper side of the electronic device 101 (e.g., when viewed from the +Z direction to the -Z direction of FIGS. 13A and 13B) or when viewed from a lower side of the electronic device 101 (e.g., when viewed from the -Z direction to the +Z direction of FIGS. 13A and 13B). A planar shape of the third base portion 431 when viewed from the upper side or the lower side of the electronic device 101 may be a cross-sectional shape obtained by cutting the third base portion 431 with a virtual plane defined by the X-axis and the Y-axis of FIGS. 13A and 13B, which may be provided in a plane.

Referring to FIGS. 13A and 13B, when viewed from a lateral side of the electronic device 101, the third base portion 431 and/or the third support plate 430 may form a curved surface corresponding to the curved guide member 313. The third base portion 431 and/or the third support plate 430 located in the second area 410B may form a curved surface so as to have a predetermined curvature or curvature radius.

According to an embodiment, the third wing portion 432 may extend from the third base portion 431. The third wing portion 432 may be configured to be at least partially curved or may be configured to be at least partially flat. For example, a portion of the third wing portion 432 located in the first area 410A, or a portion of the third wing portion 432 located in the third area 410C, may be configured to be at least partially curved. The third wing portion 432 located in the second area 410B may form a curved surface corresponding to the curved guide member 313 when viewed from a lateral side of the electronic device 101 (e.g., when viewed from the +X direction to the -X direction of FIGS. 13A and 13B, or from the -X direction to the +X direction). The third wing portion 432 located in the second area 410B may form a flat plane when viewed from an upper side of the electronic device 101 (e.g., when viewed from the +Z direction to the -Z direction of FIGS. 13A and 13B) or when viewed from a lower side of the electronic device 101 (e.g., when viewed from the -Z direction to the +Z direction of FIGS. 13A and 13B). A planar shape of the third wing portion 432 when viewed from the upper side or the lower side of the electronic device 101 may be a cross-sectional shape obtained by cutting the second wing portion 432 with a virtual plane defined by the X-axis and the Y-axis of FIGS. 13A and 13B, which may be provided in a plane.

According to an embodiment the third wing portion 432 may be formed to be curved in the direction from the outer surface of the display 330 toward the inner surface of the display 330 in the first area 410A. In the first area 410A, the third wing portion 432 may form a predetermined gap g4 with at least a portion of the lattice plate 340 or at least a portion of the display 330.

According to an embodiment, the third support plate 430 may include at least one second guide portion 433. The at least one second guide portion 433 may be formed on the third base portion 431. For example, the at least one second guide portion 433 may be formed by working at least a portion of an edge area (e.g., the edge area oriented in the- X direction of FIGS. 13A and 13B) of the third base portion 431. For example, the at least one second guide portion 433 may be a portion worked into a clip shape by bending the third base portion 431 multiple times through a hemming process. The at least one second guide portion 433 may be inserted into a second slit 352a of the second guide rail 352. Accordingly, when the second housing part 302 slides, the third support plate 430 may move along the second slit 352a of the second guide rail 352. For example, at least a portion of the third support plate 430 may move from the inside of the first housing part 301 to the outside of the first housing part 301 along the second slit 352a, and may support the lattice plate 340 and the display 330. At least a portion of the third support plate 430 may move from the outside of the first housing part 301 to the inside of the first housing part 301 along the second slit 352a, and may support the lattice plate 340 and the display 330.

As illustrated in FIG. 13A, in the first area 410A, the curvature value of the central portion 432a of the third wing portion 432 may be "0" with reference to the sliding direction of the second housing part 302.

According to an embodiment, the width (e.g., the width in the X-axis direction of FIGS. 13A and 13B) of the third wing portion 432 in the first area 410A may be smaller than the width (e.g., the width in the X-axis direction of FIGS. 13A and 13B) of the third wing portion 432 in the second area 410B. The distance (e.g., the distance in the X-axis direction of FIGS. 13A and 13B) between the third wing portion 432 and the (1-3)^{th} wing portion 415 in the first area 410A may be greater than the distance (e.g., the distance in the X-axis direction of FIGS. 13A and 13B) between the third wing portion 432 and the (1-3)^{th} wing portion 415 in the second area 410B.

FIG. 14 is a cross-sectional perspective view of an electronic device according to an embodiment of the disclosure.

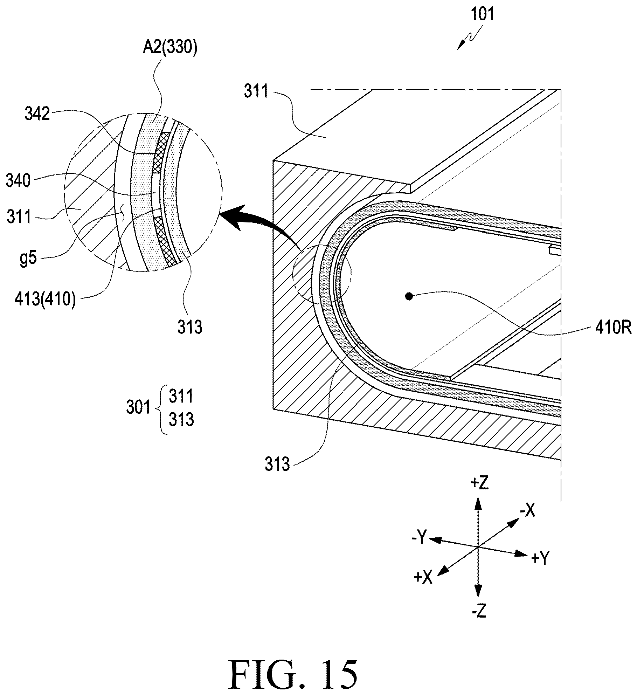

FIG. 15 is a cross-sectional perspective view of the electronic device according to an embodiment of the disclosure.

FIG. 15 is a cross-sectional perspective view obtained by cutting the electronic device in a different direction from FIG. 14.

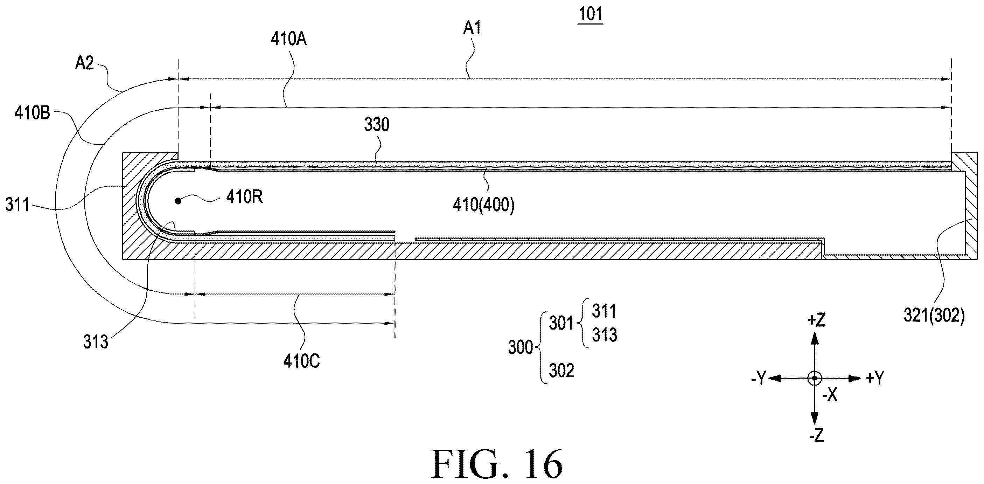

FIG. 16 is a cross-sectional view of the electronic device in a slide-in state, according to an embodiment of the disclosure.

The embodiments of FIGS. 14 to 16 may be combined with the embodiments of FIGS. 1 to 13.

Referring to FIGS. 14 to 16, the electronic device 101 may include a housing 300, a first housing part 301, a second housing part 302, a first cover member 311, a curved guide member 313, a second cover member 321, a display 330, a lattice plate 340, a lattice area 342, a first guide rail 351, a second guide rail 352, a support plate 400, a first support plate 410, a first base portion 411, a (1-1)^{th} wing portion 413, a (1-2)^{th} wing portion 415, a second support plate 420, a second base portion 421, a second wing portion 422, a third support plate 430, a third base portion 431, or a third wing portion 432.

The configurations of the housing 300, the first housing part 301, the second housing part 302, the first cover member 311, the curved guide member 313, the second cover member 321, the display 330, the lattice plate 340, the lattice area 342, the first guide rail 351, the second guide rail 352, the support plate 400, the first support plate 410, the first base portion 411, the (1-1)^{th} wing portion 413, the (1-2)^{th} wing portion 415, the second support plate 420, the second base portion 421, the second wing portion 422, the third support plate 430, the third base portion 431, or the third wing portion 432 of FIGS. 14 to 16 may be partially or wholly the same as the configurations of the housing 300, the first housing part 301, the second housing part 302, the first cover member 311, the curved guide member 313, the second cover member 321, the display 330, the lattice plate 340, the first guide rail 351, the second guide rail 352, the support plate 400, the first support plate 410, the first base portion 411, the (1-1)^{th} wing portion 413, the (1-2)^{th} wing portion 415, the second support plate 420, the second base portion 421, the second wing portion 422, the third support plate 430, the third base portion 431, or the third wing portion 432 of FIGS. 6 to 13.

To describe the configurations of the embodiments of FIGS. 14 to 16, reference numerals of the components of the embodiments of FIGS. 6 to 13B may be used illustratively.

Referring to FIG. 14, a curved shape of the support plate 400 in the third area 410C is illustrated. For example, in the third area 410C, the (1-1)^{th} wing portion 413, the (1-2)^{th} wing portion 415, the second wing portion 422, and/or the third wing portion 432 may be formed to be at least partially curved in a direction from the outer surface (e.g., the surface oriented in the -Z direction of FIG. 14) of the display 330 positioned inside the housing 300 (or the first cover member 311) toward the inner surface (e.g., the surface oriented in the +Z direction of FIG. 14) of the display 330.

Referring to FIG. 15, the curved guide member 313, the first support plate 410 (or the (1-1)^{th} wing portion 413), the lattice plate 340, and the second display area A2, which are sequentially stacked, are illustrated. The curved guide member 313, the first support plate 410 (or the (1-1)^{th} wing portion 413), the lattice plate 340, and the second display area A2 may each form a curved surface with respect to the first point 410R.

According to an embodiment, a portion of the second display area A2 located on the curved guide member 313 may be in close contact with the lattice plate 340. A portion of the lattice plate 340 located on the curved guide member 313 may be in close contact with the (1-1)^{th} wing portion 413.

According to an embodiment, the outer surface of the second display area A2 located on the curved guide member 313 may form a predetermined gap g5 with the first cover member 311. Accordingly, when the second housing part 302 slides, the formation of scratches on the outer surface of the second display area A2 moving in the second area 410B may be restricted or reduced.

Referring to FIG. 16, the slide-in state (e.g., FIG. 2 or FIG. 5A) of the electronic device 101 is illustrated. For example, the state illustrated in FIG. 16 may be a state in which the second housing part 302 is located at a retracted position with respect to the first housing part 301. According to an embodiment, the support plate 400 (or the first support plate 410) may be configured to support a portion of the first display area A1 in the first area 410A. According to an embodiment, the support plate 400 (or the first support plate 410) may be configured to support a portion of the first display area A1 and a portion of the second display area A2 in the second area 410B. According to an embodiment, the support plate 400 (or the first support plate 410) may be configured to support a portion of the second display area A2 in the third area 410C.

According to an embodiment, with reference to the width direction of the electronic device 101, the first support plate 410, the second support plate 420, and the third support plate 430 may support the display 330 while spaced apart from each other. Accordingly, a supporting force for maintaining flatness of a portion of the display 330 exposed to the outside of the electronic device 101 in the width direction of the electronic device may be uniformly applied in the width direction of the display 330. In addition, as the support plates 410, 420, and 430 are spaced apart from each other, a space between the spaced-apart portions may be provided as a space for accommodating or mounting other electric/electronic components of the electronic device 101.

According to an embodiment, the wing portions 413, 415, 422, and 432 may be formed to be curved in the first area 410A or the third area 410C and may be formed to be flat in the second area 410B. As the wing portions 413, 415, 422, and 432 located in the second area 410B are provided flat to be in close contact with the curved guide member, a repulsive force acting on the lattice plate 340, which is located in the second area 410B, in a direction away from the curved guide member 313, may be restricted or reduced. Accordingly, the coupling force (e.g., bonding force via the adhesive member 381) between the lattice plate 340 and the base portions 411, 421, and 431 may be relatively improved, and lifting of the lattice plate 340 or the display 330 with respect to the support plate 400 may be restricted or reduced. In addition, as the lattice plate 340 and the support plate 400 are provided in a plate shape and are coupled (or assembled), a manufacturing process and/or an assembling process of the lattice plate 340 and the support plate 400 may be easily provided.

An electronic device (e.g., a portable terminal) may include a display in a form having a flat surface or in a form having a flat surface and a curved surface. An electronic device including a display may have a limitation in implementing a screen larger than the size of the electronic device due to a fixed display structure. Accordingly, electronic devices including a rollable display are being researched.

An electronic device (or rollable electronic device) including a rollable display may allow an area of a display area and/or a portion of the electronic device to be expanded or reduced when a sliding operation is implemented.

A portion of the rollable display may be provided in a bent state in a specific area of the electronic device and may be at least partially unfolded according to the sliding operation of the electronic device.

As such, the rollable display may have flexibility, and the electronic device may include a support structure for supporting the rollable display having flexibility. The support structure has been required to be at least partially flexible to support the bent state of the rollable display. To secure supporting rigidity of the rollable display while simultaneously maintaining flexibility, the support structure has been provided with a plurality of complicatedly coupled components.

An embodiment of the disclosure may provide a support plate configured to alleviate repulsive force applied to a flexible display at a curved portion thereof, and an electronic device including the same.

An embodiment of the disclosure may provide a flexible display configured to provide a force to maintain a flat state of at least a portion of the display exposed to the outside of the electronic device, and an electronic device including the same.

However, the problems that the disclosure seeks to solve are not limited to the aforementioned problems, and may be expanded in various ways without departing from the spirit and scope of the disclosure.

An embodiment of the disclosure may provide an electronic device configured to support a flexible display in a linear form or a planar form with reference to the sliding direction of the electronic device.

An embodiment of the disclosure may provide a flexible display that is not bent with reference to the sliding direction of the electronic device, thereby improving quality of a visual image provided to a user, and an electronic device including the same.

The effects that are capable of being obtained by the disclosure are not limited to those described above, and other effects not described above may be clearly understood by a person ordinarily skilled in the art to which the disclosure belongs based on the following description.

According to an embodiment of the disclosure, an electronic device 101 may include a housing 300, a flexible display 330, or a first support plate 410. The housing 300 may include a first housing part 301 or a second housing part 302. The second housing part 302 may be configured to move between a retracted position and an extended position with respect to the first housing part 301. The flexible display 330 may be supported by the first housing part 301 or the second housing part 302. The first support plate 410 may be configured to support at least a portion of the flexible display 330. The first support plate 410 may include a first base portion 411 or a first wing portion 413, 415. The first wing portion 413, 415 may extend from the first base portion 411. At least a portion of the first wing portion 411, 415 may be configured to be curved in a first direction toward an inner surface of the flexible display 330 from an outer surface of the flexible display 330 while the second housing part 302 is in the extended position.

According to an embodiment, the first wing portion 413, 415 may include a (1-1)^{th} wing portion 413 or a (1-2)^{th} wing portion 415. The (1-1)^{th} wing portion 413 may extend from one edge of the first base portion 411. The (1-2)^{th} wing portion 415 may extend from the other edge of the first base portion 411.

According to an embodiment, while the (1-1)^{th} wing portion 413 is curved, a predetermined gap g1 may be formed between the (1-1)^{th} wing portion 413 and the flexible display 330. While the (1-2)^{th} wing portion 415 is curved, a predetermined gap g2 may be formed between the (1-2)^{th} wing portion 415 and the flexible display 330.

According to an embodiment, the electronic device may further include a second support plate 420 or a third support plate 430. The second support plate 420 may be configured to support the flexible display 330. The second support plate 420 may be disposed adjacent to the (1-1)^{th} wing portion 413. The third support plate 430 may be configured to support the flexible display 330. The third support plate 430 may be disposed adjacent to the (1-2)^{th} wing portion 415.

According to an embodiment, the electronic device may further include a guide rail 350. The guide rail 350 may be configured to guide movement of the second support plate 420 or the third support plate 430.

According to an embodiment, each of the second support plate 420 or the third support plate 430 may include at least one guide portion 423, 433 configured to be inserted into a slit 351a, 352a of the guide rail 350.

According to an embodiment, the at least one guide portion 423, 433 may be formed by processing at least a portion of each of the second support plate 420 or the third support plate 430.

According to an embodiment, the electronic device may further include a lattice plate 340. The lattice plate 340 may be disposed between the flexible display 330 and the first support plate 410.

According to an embodiment, the electronic device may further include a curved guide member 313. The curved guide member 313 may be disposed in the housing 300. The curved guide member 313 may be configured to support a bent portion of the flexible display 330.

According to an embodiment, at least a portion of the first wing portion 413, 415 may be configured to be in close contact with the bent portion of the flexible display 330.

According to an embodiment, at least one portion of the first wing portion 413, 415 disposed at a position not corresponding to the curved guide member 313 may have a first width D2, D4 in a second direction perpendicular to the first direction. The remaining portion of the first wing portion 413, 415 disposed at a position corresponding to the curved guide member 313 may have a second width D3, D5 in the second direction. The first width D2, D4 may be larger than the second width D3, D5.

According to an embodiment, the remaining portion of the first wing portion 413, 415 disposed at a position corresponding to the curved guide member 313 may be in close contact with the curved guide member 313.

According to an embodiment, at least a portion of the first base portion 411 disposed at a position not corresponding to the curved guide member 313 may have a third width D1 in the second direction perpendicular to the first direction. The remaining portion of the first base portion 411 disposed at a position corresponding to the curved guide member 313 may have a fourth width D6 in the second direction. The third width D1 may be substantially the same as the fourth width D6.

According to an embodiment, the first base portion 411 may be coupled to the flexible display 330.

According to an embodiment, the electronic device may further include an adhesive member 381. The adhesive member 381 may be disposed between the first base portion 411 and the flexible display 330.

According to an embodiment of the disclosure, the electronic device 101 may include a housing 300, a flexible display 330, a first support plate 410, or a lattice plate 340. The housing 300 may include a first housing part 301 or a second housing part 302. The second housing part 302 may be configured to move between a retracted position and an extended position with respect to the first housing part 301. The flexible display 330 may be supported by the first housing part 301 or the second housing part 302. The first support plate 410 may be configured to support at least a portion of the flexible display 330. The first support plate 410 may include a first base portion 411 or a first wing portion 413, 415. The first wing portion 413, 415 may extend from the first base portion 411. The lattice plate 340 may be disposed between the flexible display 330 and the first support plate 410.

According to an embodiment, the lattice plate 340 may include a lattice area 342. The lattice area 342 may be formed to penetrate at least a portion of the lattice plate 340.

According to an embodiment, the electronic device may further include a curved guide member 313. The curved guide member 313 may be configured to support a bent portion of the flexible display 330.

According to an embodiment, the electronic device may further include a second support plate 420 or a third support plate 430. The second support plate 420 may be disposed adjacent to one side of the first support plate. The third support plate 430 may be disposed adjacent to the other side of the first support plate.

According to an embodiment, the electronic device may further include a first guide rail 351 or a second guide rail 352. The first guide rail 351 may guide movement of the second support plate 420. The second guide rail 352 may guide movement of the third support plate 430.

In the foregoing detailed description of this document, specific embodiments have been described. However, it will be evident to a person ordinarily skilled in the art that various modifications can be made without departing from the scope of the disclosure.

## Claims

1. An electronic device (101) comprising:
a housing (300) including a first housing part (301) and a second housing part (302), wherein the second housing part (302) is configured to move between a retracted position and an extended position with respect to the first housing part (301);
a flexible display (330) supported by the first housing part (301) and the second housing part 302; and
a first support plate (410) configured to support at least a portion of the flexible display (330) and including a first base portion (411) and a first wing portion (411, 413) extending from the first base portion (411),
wherein at least a portion of the first wing portion (411, 415) is configured to be curved in a first direction toward an inner surface of the flexible display (330) from an outer surface of the flexible display (330) while the second housing part (302) is in the extended position.

2. The electronic device of claim 1, wherein the first wing portion (413, 415) includes:
a (1-1)^{th} wing portion (413) extending from one edge of the first base portion; and
a (1-2)^{th} wing portion (415) extending from an opposite edge of the first base portion.

3. The electronic device of one of claims 1 to 2, wherein a predetermined gap (g1) is formed between the (1-1)th wing portion (413) and the flexible display (330) while the (1-1)th wing portion (413) is curved, and
wherein a predetermined gap (g2) is formed between the (1-2)th wing portion (415) and the flexible display (330) while the (1-2)th wing portion (415) is curved.

4. The electronic device of any one of claims 1 to 3, further comprising:
a second support plate (420) configured to support the flexible display (330) and disposed adjacent to the (1-1)th wing portion (413); and
a third support plate (430) configured to support the flexible display (330) and disposed adjacent to the (1-2)th wing potion (415).

5. The electronic device of any one of claims 1 to 4, further comprising:
a guide rail (350) configured to guide movement of the second support plate (420) and the third support plate (430).

6. The electronic device of any one of claims 1 to 5, wherein each of the second support plate (420) and the third support plate (430) includes at least one guide portion (423, 433) configured to be inserted in a slit (351a, 352a) of the guide rail (350).

7. The electronic device of any one of claims 1 to 6, wherein the at least one guide portion (423, 433) is formed by processing at least a portion of each of the second support plate (420) and the third support plate (430).

8. The electronic device of any one of claims 1 to 7, further comprising:
a lattice plate (340) disposed between the flexible display (330) and the first support plate (410).

9. The electronic device of any one of claims 1 to 8, further comprising:
a curved guide member (313) disposed in the housing (300) and configured to support a bent portion of the flexible display (330).

10. The electronic device of any one of claims 1 to 9, wherein at least a portion of the first wing portion (413, 415) is configured to be in close contact with the bent portion of the flexible display (330).

11. The electronic device of any one of claims 1 to 10, wherein at least a portion of the first wing portion (413, 415), which is disposed at a position not corresponding to the curved guide member (313), has a first width (D2, D4) in a second direction perpendicular to the first direction,
wherein a remaining portion of the first wing portion (413, 415), which is disposed at a position corresponding to the curved guide member (313), has a second width (D3, D5) in the second direction, and
wherein the first width (D2, D4) is larger than the second width (D3, D5).

12. The electronic device of any one of claims 1 to 11, wherein the remaining portion of the first wing portion (413, 415), which is disposed at a position corresponding to the curved guide member (313), is in close contact with the curved guide member (313).

13. The electronic device of any one of claims 1 to 12, wherein at least a portion of the first base portion (411), which is disposed at a position not corresponding to the curved guide member (313), has a third width (D1) in a second direction perpendicular to the first direction,
wherein a remaining portion of the first base portion (411), which is disposed at a position corresponding to the curved guide member (313), has a fourth width (D6) in the second direction, and
wherein the third width (D1) is substantially same as the fourth width (D6).

14. The electronic device of any one of claims 1 to 13, wherein the first base portion (411) is coupled to the flexible display (330).

15. The electronic device of any one of claims 1 to 14, further comprising:
an adhesive member (381) disposed between the first base portion (411) and the flexible display (330).
